# EUROPÄISCHE PATENTSCHRIFT

(11) **EP 3 615 322 B1**
(45) Veröffentlichungstag und Bekanntmachung des Hinweises auf die Patenterteilung: **28.10.2020**
(21) Anmeldenummer: 18728035.9
(22) Anmeldetag: 23.04.2018
(51) Int. Cl.: B30B 9/30, B65D 83/00, B65F 1/12

(54) **EINRICHTUNG ZUM SAMMELN VON PRESSGUT UND ZUM ZUFÖRDERN DES GESAMMELTEN PRESSGUTS ZU EINER DAS PRESSGUT PRESSENDEN PRESSE UND VERFAHRBARER SAMMELWAGEN ZUR VERWENDUNG IN DER EINRICHTUNG**
DEVICE FOR COLLECTING COMPACTION MATERIAL AND FOR FEEDING THE COLLECTED COMPACTION MATERIAL TO A PRESS THAT COMPACTS THE COMPACTION MATERIAL, AND MOBILE COLLECTION CART FOR USE IN THE DEVICE
DISPOSITIF DE COLLECTE DE PRODUIT À PRESSER ET D'AMENÉE DU PRODUIT À PRESSER COLLECTÉ À UNE PRESSE DESTINÉE À PRESSER LE PRODUIT À PRESSER ET CHARIOTS DE COLLECTE DÉPLAÇABLES DESTINÉS À ÊTRE UTILISÉS DANS LE DISPOSITIF

(30) Priorität: 24.04.2017 DE 102017108631
(43) Veröffentlichungstag der Anmeldung: 04.03.2020
(73) Patentinhaber: Strautmann Gépgyártó Hungária KFT, 3143 Mátranovák (HU)
(72) Erfinder: STRAUTMANN, Wolfgang, 49196 Bad Laer (DE); STRAUTMANN, Philipp, 49080 Osnabrück (DE); STRAUTMANN, Dominik, 48151 Münster (DE)
(74) Vertreter: Linnemann, Winfried
(86) Internationale Anmeldenummer: PCT/EP2018/060292
(87) Internationale Veröffentlichungsnummer: WO 2018/197387

(56) Entgegenhaltungen:
- CH-A- 521 906
- DE-A1-102009 047 297
- DE-A1-102010 062 688
- GB-A- 2 297 964
- US-A- 5 645 187

## Beschreibung

Die vorliegende Erfindung betrifft eine Einrichtung zum Sammeln von Pressgut und zum Zufördern des gesammelten Pressguts zu einer das Pressgut pressenden Presse, mit wenigstens einem verfahrbaren Sammelwagen, der einen Sammelraum für zu pressendes Pressgut aufweist, und mit einer Pressgutzufördervorrichtung, an welche der Sammelwagen andockbar ist, wobei der Sammelwagen einen Boden und eine unterseitigen Räderanordnung sowie wenigstens zwei einander gegenüberliegende Seitenwände aufweist und wobei unter Anheben nach oben das zu pressende Pressgut mittels der Pressgutzufördervorrichtung aus dem Sammelwagen entnehmbar und einem Pressraum oder Pressgutvorratsraum der Presse zuförderbar ist.

Außerdem betrifft die Erfindung einen verfahrbaren Sammelwagen zur Verwendung in der vorstehend angegebenen Einrichtung oder auch z. B. an einem Presscontainer.

Eine Einrichtung der vorstehend genannten Art und gemäß dem Oberbegriff des Anspruchs 1 ist aus dem Dokument DE 10 2009 047 297 A1 bekannt. Dieses Dokument zeigt eine Presse mit mindestens einem an-und abkoppelbaren Sammelwagen für zu pressendes Pressgut, wobei die Presse einen Pressraum aufweist, wobei der Sammelwagen einen Sammelraum mit einen Boden und Wänden aufweist, wobei bei an die Presse angekoppeltem Sammelwagen in diesem gesammeltes Pressgut maschinell aus dem Sammelwagen in den Pressraum überführbar ist und wobei im von der Presse entkoppelten Zustand der Sammelwagen an einem von der Presse entfernten Ort mit zu pressendem Pressgut befüllbar ist. Zumindest der Boden des Sammelwagens ist zu dessen Entleerung aus einer unteren Sammelstellung nach oben hin sowie zurück bewegbar. Weiter ist eine Pressgutzufördervorrichtung vorgesehen, mit der bei an die Presse angekoppeltem Sammelwagen unter Bewegung zumindest des Bodens nach oben das in dem Sammelraum befindliche Pressgut von oben abnehmbar und zum Pressraum der Presse förderbar ist. An dem Sammelwagen ist eine Hubeinrichtung vorgesehen, mittels welcher zumindest der Boden des Sammelwagens heb- und senkbar ist. Dabei kann der Boden des Sammelwagens für sich relativ zum übrigen Sammelwagen heb- und senkbar sein. Alternativ kann der Boden mit einer bei an die Presse angekoppeltem Sammelwagen von der Presse abgewandten Rückwand des Sammelwagens zu einem L-förmigen Boden-Wand-Element verbunden sein und das Boden-Wand-Element kann relativ zu dem übrigen Sammelwagen heb- und senkbar sein.

Eine Weiterbildung der Einrichtung gemäß dem vorstehend zitierten Stand der Technik ist in dem Dokument DE 10 2010 000 938 A1 beschrieben. Dieses Dokument zeigt eine Presse mit Sammelwagen und Pressgutzufördervorrichtung, bei der eine Hubeinrichtung zum Anheben zumindest des Bodens des Sammelwagens durch mindestens ein drehantreibbares Zahnrad an der Presse oder an der Pressgutzufördervorrichtung gebildet ist, welches beim Ankoppeln des Sammelwagens an die Presse in Eingriff mit mindestens einer Zahnstange tritt, welche mit dem heb-und senkbaren Teil des Sammelwagens verbunden ist.

Als nachteilig wird bei den bekannten Einrichtungen angesehen, dass die an dem Sammelwagen und/oder der Pressgutzufördervorrichtung angeordnete Hubeinrichtung zum Anheben des Pressguts im Sammelraum des Sammelwagens technisch sehr aufwendig ist, was zu einem ungünstig hohen Gewicht des in der Regel manuell zu verfahrenden Sammelwagens führt sowie zu hohen Herstellungskosten der Einrichtung beiträgt.

Für die vorliegende Erfindung stellt sich daher die Aufgabe, eine Einrichtung der eingangs genannten Art zu schaffen, bei der die an dem Sammelwagen und/oder der Pressgutzufördervorrichtung angeordnete Hubeinrichtung zum Anheben des Pressguts im Sammelraum des Sammelwagens technisch einfacher sowie leichter und in der Herstellung kostengünstiger ist. Außerdem soll ein verfahrbarer Sammelwagen zur Verwendung in der Einrichtung geschaffen werden.

Die Lösung des ersten, die Einrichtung betreffenden Teils der Aufgabe gelingt erfindungsgemäß mit einer Einrichtung der eingangs genannten Art, die dadurch gekennzeichnet ist,
- dass an oder in dem Sammelwagen ein bahnförmiges, flexibles oder gelenkiges Tragelement mit einem Bodenbereich und mit wenigstens zwei einander gegenüberliegenden Wandbereichen mit mindestens je einer oberen, freien Kante angeordnet ist,
- dass das Tragelement in einer Grundstellung U-förmig parallel oder annähernd parallel zu wenigstens zwei einander gegenüberliegenden Seitenwänden und zu dem Boden des Sammelwagens verlaufend an diesen anliegt oder wenigstens zwei einander gegenüberliegende Seitenwände und den Boden des Sammelwagens bildet und
- dass im an die Pressgutzufördervorrichtung angedockten Zustand des Sammelwagens zum Zweck des Anhebens des im Sammelwagen befindlichen, zu pressenden Pressguts das Tragelement von der freien Kante zumindest eines seiner Wandbereiche aus verkürzbar oder anhebbar ist.

Mit der Erfindung wird vorteilhaft die Einrichtung technisch deutlich vereinfacht, was die Herstellung kostengünstiger macht. Dabei wird das Tragelement zugleich auch als Förderelement zum Anheben des Pressguts im Sammelraum des Sammelwagens zum Zweck der Übergabe des Pressguts an die Pressgutzufördervorrichtung genutzt. Außerdem ist es hiermit möglich, den Sammelwagen als Teil der Einrichtung nicht nur technisch einfacher, sondern auch mit einem geringen Eigengewicht auszuführen, was seine Handhabung für das Bedienungspersonal vereinfacht und sicherer macht. Letzterer Vorteil kommt besonders zum Tragen, wenn, was im praktischen Einsatz üblich ist, die Einrichtung mehrere Sammelwagen aufweist.

Eine erste Weiterbildung der Einrichtung sieht vor, dass an der freien Kante eines der Wandbereiche des Tragelements eine Wickelwelle angeordnet ist, die im an die Pressgutzufördervorrichtung angedockten Zustand des Sammelwagens in eine das Tragelement aufwickelnde Drehung versetzbar ist. Durch die Drehung der Wickelwelle wird das bahnförmige Tragelement aufgewickelt und somit verkürzt, was das gewünschte Anheben des Pressguts im Sammelraum des Sammelwagens bewirkt. Nach einem auf diese Weise erfolgten Entleeren des Sammelraums wird das Tragelement durch entgegengesetzte Drehung der Wickelwelle wieder in seine Grundstellung gebracht, in der der Sammelwagen wieder zur Aufnahme von zu pressendem Pressgut bereit ist.

Eine dazu alternative Weiterbildung der Einrichtung sieht vor, dass an der freien Kante zweier einander gegenüberliegender Wandbereiche des bahnförmigen Tragelements je eine Wickelwelle angeordnet ist, die im an die Pressgutzufördervorrichtung angedockten Zustand des Sammelwagens in eine das Tragelement aufwickelnde synchrone oder annähernd synchrone Drehung versetzbar sind. In dieser Ausführung wird durch die Drehung beider Wickelwellen das bahnförmige Tragelement aufgewickelt und somit verkürzt, was ebenfalls das gewünschte Anheben des Pressguts im Sammelraum des Sammelwagens bewirkt. Diese Ausführung ist zwar aufgrund der zwei Wickelwellen etwas aufwändiger, hat aber den Vorteil, dass praktisch keine möglicherweise störenden oder verschleißfördernden Relativbewegungen zwischen dem Tragelement und dem Pressgut im Sammelraum des Sammelwagens auftreten. Nach einem Entleeren des Sammelraums wird das Tragelement durch entgegengesetzte Drehung der Wickelwellen wieder in seine Grundstellung gebracht, in der der Sammelwagen zur erneuten Aufnahme von zu pressendem Pressgut bereit ist.

Weiter sieht die Erfindung vor, dass an der Pressgutzufördervorrichtung ein oder mehrere drehantreibbare Antriebselemente, z. B. Druckrollen, angeordnet sind, die im an die Pressgutzufördervorrichtung angedockten Zustand des Sammelwagens mit dessen Wickelwelle oder Wickelwellen in Drehantriebseingriff stehen oder bringbar sind, beispielsweise mit einem die Wickelwelle oder Wickelwellen anhebenden und gegen die Antriebelemente drückenden Hebelmechanismus. Damit bleibt vorteilhaft der Sammelwagen von aufwändigen und gewichtigen Antriebselementen frei, denn diese sind an der stationären Pressgutzufördervorrichtung angeordnet.

Eine weitere, alternative Ausführung der Einrichtung ist dadurch gekennzeichnet, dass ein fester Oberrand des Sammelwagens als Umlenkelement ausgebildet ist, über welches der eine Wandbereich des Tragelements um 180° nach außen und unten umgelenkt ist, wobei im an die Pressgutzufördervorrichtung angedockten Zustand des Sammelwagens die freien Kante des umgelenkten Wandbereichs des Tragelements aus dessen Grundstellung in eine Bewegung nach unten versetzbar ist. In dieser Ausführung der Einrichtung ist das Aufwickeln des Tragelements durch ein Ziehen des Tragelements über ein Umlenkelement ersetzt. Auch in dieser Ausführung der Einrichtung wird das gewünschte Anheben des Pressguts im Sammelraum des Sammelwagens auf technisch vorteilhaft einfache Art und Weise bewirkt. Nach einem Entleeren des Sammelraums wird das Tragelement durch entgegengesetztes Verschieben über das Umlenkelement wieder in seine Grundstellung gebracht, in der der Sammelwagen wieder zur Aufnahme von zu pressendem Pressgut bereit ist. Das Ziehen und Verschieben des Tragelements über das Umlenkelement erfolgt zweckmäßig mittels eines geeigneten Kraftantriebs, wie weiter unten noch erläutert wird.

Eine Alternative zu der zuletzt beschriebenen Ausführung der Einrichtung schlägt vor, dass zwei einander gegenüberliegende feste Oberränder des Sammelwagens jeweils als Umlenkelement ausgebildet sind, über welche zwei einander gegenüberliegende Wandbereiche des Tragelements jeweils um 180° nach außen und unten umgelenkt sind, wobei im an die Pressgutzufördervorrichtung angedockten Zustand des Sammelwagens die freien Kanten der umgelenkten Wandbereiche des Tragelements aus dessen Grundstellung jeweils in eine synchrone oder annähernd synchrone Bewegung nach unten versetzbar sind. In dieser Ausführung wird durch Umlenken und Bewegen zweier Wandbereiche das bahnförmige Tragelement innerhalb des Sammelraums verkürzt, was ebenfalls das gewünschte Anheben des Pressguts im Sammelraum des Sammelwagens bewirkt. Diese Ausführung ist zwar aufgrund der zwei Umlenkungen und Bewegungen von Wandbereichen etwas aufwändiger, hat aber den Vorteil, dass praktisch keine möglicherweise störenden oder verschleißfördernden Relativbewegungen zwischen dem Tragelement und dem Pressgut im Sammelraum des Sammelwagens auftreten.

Eine weitere Alternative zu den beiden vorstehend beschriebenen Ausführungen der Einrichtung sieht vor, dass das Tragelement neben seinem Bodenbereich vier mit dem Bodenbereich verbundene oder einstückige, untereinander nicht unmittelbar verbundene Wandbereiche mit je einer freien Kante aufweist und dass vier feste Oberränder des Sammelwagens jeweils als Umlenkelement ausgebildet sind, über welche die Wandbereiche des Tragelements jeweils um 180° nach außen und unten umgelenkt sind, wobei im an die Pressgutzufördervorrichtung angedockten Zustand des Sammelwagens die freien Kanten der umgelenkten Wandbereiche des Tragelements aus dessen Grundstellung jeweils in eine synchrone oder annähernd synchrone Bewegung nach unten versetzbar sind. Diese Ausführung kann insbesondere für Anwendungsfälle der Einrichtung, bei denen relativ schwergewichtiges Pressgut zu sammeln, zu transportieren und anzuheben ist, von Vorteil ein, da sich hier die Last des Pressguts bei dessen Anheben zum Zweck des Entleerens des Sammelwagens auf alle vier Wandbereiche des Tragelements verteilt.

Um bei den drei vorstehend beschriebenen Ausführungen der Einrichtung das Anheben des Pressguts im Sammelraum des Sammelwagens technisch einfach zu bewirken, ist erfindungsgemäß vorgesehen, dass an der Pressgutzufördervorrichtung eine vertikal verfahrbare Hubarmanordnung angeordnet ist, wobei die Hubarmanordnung im an die Pressgutzufördervorrichtung angedockten Zustand des Sammelwagens mit der freien Kante des umgelenkten Wandbereichs oder mit den freien Kanten der umgelenkten Wandbereiche des Tragelements in Bewegungseingriff steht oder bringbar ist. Damit bleibt vorteilhaft der Sammelwagen von aufwändigen und gewichtigen Antriebselementen frei, da diese an der stationären Pressgutzufördervorrichtung angeordnet sind.

Eine noch weitere Alternative zu den zuvor genannten Ausführungen der Einrichtung ist dadurch gekennzeichnet, dass das Tragelement an der freien Kante eines ersten Wandbereichs verschwenkbar an einem Oberrand des Sammelwagens angelenkt ist, dass ausgehend von der freien Kante dieses ersten Wandbereichs ein Wandbereichsabschnitt, dessen Fläche im Wesentlichen oder annähernd der Querschnittsfläche des Sammelraums des Sammelwagens entspricht, als starre Fläche ausgebildet ist und dass das Tragelement von der freien Kante eines dem ersten Wandbereich gegenüberliegenden zweiten Wandbereichs aus verkürzbar oder anhebbar ist. Bei dieser Ausführung weist das Tragelement einen starren, um den zugehörigen Oberrand des Sammelwagens, z. B. mittels Scharnieren, verschwenkbaren Wandbereichsabschnitt auf, der im Grundzustand des Sammelwagens mit abgesenktem Tragelement einen im Wesentlichen vertikal verlaufenden oberen Teil des ersten Wandbereichs bildet. Wenn das Tragelement zum Zweck des Anhebens des zu pressenden Pressguts an seinem zweiten Wandbereich verkürzt oder angehoben wird, dann führt dies nach und nach zu einem zunehmenden Verschwenken des starren Wandbereichsabschnitts aus der vertikalen Ausrichtung hin zu einer horizontalen oder annähernd horizontalen Ausrichtung. Hiermit wird u.a. gewährleistet, dass die Pressgutzufördervorrichtung das zuvor im Sammelwagen gesammelte Pressgut zuverlässig und vollständig aus dem Sammelwagen abnehmen kann, ohne unerwünschte Pressgutreste zurückzulassen.

Aus Gründen eines geringen Gewichts besteht der starre Wandbereichsabschnitt vorzugsweise aus Kunststoff. Auch Holz oder Leichtmetall sind geeignete Materialien für den starren Wandbereichsabschnitt.

In weiterer Ausgestaltung der Einrichtung ist vorgesehen, dass die freie Kante des zweiten Wandbereichs des Tragelements lösbar mit dem zugehörigen Oberrand des Sammelwagens verbunden ist, dass an der Pressgutzufördervorrichtung eine Zugeinrichtung oder eine Wickeleinrichtung angeordnet ist, die im an die Pressgutzufördervorrichtung angedockten Zustand des Sammelwagens mit der freien Kante des zweiten Wandbereichs des Tragelements in Eingriff bringbar ist und mit der das Tragelement nach oben hin oder unter Umlenkung über den Oberrand des Tragwagens nach unten hin ziehbar oder aufwickelbar ist. Am Sammelwagen selbst braucht hierbei keine Zugeinrichtung oder Wickeleinrichtung vorgesehen zu sein, wodurch der Sammelwagen technisch einfach und damit kostengünstig gehalten wird und nur ein geringes Gewicht aufweist, was das üblicherweise manuell erfolgende Bewegen des Sammelwagens erleichtert.

Es ist auch eine dazu alternative Ausführung der Einrichtung möglich, bei der an dem Sammelwagen eine Zug- oder Wickeleinrichtung angeordnet ist, bei der die freie Kante des zweiten Wandbereichs des Tragelements mit der zugehörigen Zug-oder Wickeleinrichtung in Eingriff steht und bei der mit der Zug- oder Wickeleinrichtung das Tragelement nach oben hin oder unter Umlenkung über den Oberrand des Tragwagens nach unten hin ziehbar oder aufwickelbar ist.

Um platzsparend die nötige Zuglänge der Zugeinrichtung zu ermöglichen, wird vorgeschlagen, dass die Zugeinrichtung flaschenzugartig mit einer horizontalen, vertikal verfahrbaren Umlenkrolle oder -walze, über welche das Tragelement geführt ist, ausgebildet ist und Haltemittel zum lösbaren Fixieren der freien Kante des zweiten Wandbereichs des Tragelements aufweist.

Weiter schlägt die Erfindung vor, dass in einer Anhebe-Endposition des Tragelements dessen starrer Wandbereichsabschnitt den Querschnitt des Sammelraums des Sammelwagens im Wesentlichen oder annähernd überdeckt und eine horizontale Lage oder eine in Richtung zur Pressgutzufördervorrichtung abwärts oder aufwärts geneigte Lage einnimmt. In jeden Fall sollte angestrebt werden, dass in der Anhebe-Endposition des Tragelements dessen starrer Wandbereichsabschnitt möglichst nah an den fördernden Elementen, wie Zähne einer oder mehrerer Zahnwalzen oder dergleichen, der Pressgutzufördervorrichtung zu liegen kommt, aber nicht in schädlichen Kontakt mit diesen fördernden Elementen gelangt.

Das Tragelement im Sammelwagen ist vorteilhaft mit geringem Gewicht ausführbar. Um dennoch eine sichere und zuverlässige Rückführung des Tragelements im entladenen Zustand zu gewährleisten, schlägt die Erfindung vor, dass an dem Sammelwagen eine das Tragelement mit einer in Richtung zu dessen Grundstellung wirkenden Kraft vorbelastende Rückstellvorrichtung angeordnet ist.

Gemäß einer diesbezüglichen ersten Weiterbildung ist vorgesehen, dass in oder an den Bereichen des Tragelements, die in dessen Grundstellung unteren Ecken des Sammelraums am nächsten liegen, ein Rückführen des Tragelements in seine Grundstellung beim Absenken des Tragelements aus einer angehobenen Stellung bewirkende oder unterstützende Beschwerungsgewichte als Rückstellvorrichtung eingearbeitet oder angebracht sind. Die Beschwerungsgewichte können beispielsweise in technisch vorteilhaft einfacher Art und Weise durch metallische, leistenförmige, horizontal verlaufende Profile gebildet sein, die die Bewegungen des Tragelements nicht behindern, aber dessen Rückführung in leerem Zustand in seine gewünschte, U-förmige Grundstellung bewirken. Zweckmäßig sind dabei im flexiblen Teil des Tragelements die Beschwerungsgewichte eingefasst oder befestigt, wobei deren Lage vorzugsweise so gewählt ist, dass die Beschwerungsgewichte dort angeordnet sind, wo das Tragelement in seiner Grundstellung auf den Boden des Sammelwagens trifft oder diesen bildet. Durch die Beschwerungsgewichte werden die vertikalen Teile des Tragelements, also dessen Wandbereiche, straff gezogen und der Bodenbereich des Tragelements, der sich zwischen den vertikal hängenden Wandbereichen erstreckt, wird, vorausgesetzt dass er nicht länger als der Querschnitt des Sammelwagens ist, ebenfalls glattgezogen.

Gemäß einer diesbezüglichen alternativen Weiterbildung kann die Rückstellvorrichtung eine die vorbelastende Kraft erzeugende Spannfederanordnung aufweisen, die unmittelbar oder über flexible Zugmittel an zwei oder mehr Punkten in Übergangsbereichen zwischen den Wandbereichen und dem Bodenbereich des Tragelements angreift. Hiermit kann das Tragelement nach einem Entladen des Sammelwagens technisch einfach und zuverlässig in seine Grundform und damit in ein maximales Volumen des Sammelraums zurückgeführt werden, sodass dann ein unbehindertes erneutes Sammeln von Pressgut im Sammelraum möglich ist.

Bei einer weiteren Ausgestaltung der erfindungsgemäßen Einrichtung ist vorgesehen, dass das Tragelement zumindest an der freien Kante eines seiner Wandbereiche an dem übrigen Sammelwagen lose aufgehängt ist und dass die Pressgutzufördervorrichtung eine Hebearmanordnung aufweist, mit der im an die Pressgutzufördervorrichtung angedockten Zustand des Sammelwagens das Tragelement an seiner lose aufgehängten, von der Pressgutzufördervorrichtung entfernten freien Kante erfassbar und mittels Verschwenkens der Hebearmanordnung in Aufwärtsrichtung bis in eine eine zur Pressgutzufördervorrichtung hin abwärts geneigte Pressgutrutschfläche bildende Form nach oben ziehbar ist. Auch in dieser Ausgestaltung der Einrichtung wird mittels des Tragelements und seiner Bewegung das Entleeren des Sammelraums bewirkt.

Um bei der zuvor beschriebenen Ausgestaltung der Einrichtung den erforderlichen Verschwenkungsweg der Hebearmanordnung zu begrenzen, ist weiter vorgesehen, dass die Pressgutzufördervorrichtung ein stangenförmiges Anlegeelement aufweist, welches bei an die Pressgutzufördervorrichtung angedocktem Sammelwagen über dessen Oberseite verläuft und an welches das Tragelement bei seinem Hochziehen unter Abwinklung anlegbar ist. Das Tragelement wird also bei seinem Hochziehen mittels des stationären Anlegeelements abgewinkelt oder abgeknickt. Damit wird insbesondere die Höhe, die für die Bewegung der Hebearmanordnung nach oben erforderlich ist, reduziert, sodass die Einrichtung auch an Einsatzorten mit begrenzter Deckenhöhe einsetzbar ist. Zweckmäßig verläuft das Anlegeelement horizontal über dem angedockten Sammelwagen und parallel zur Fläche des Tragelements, um ein gleichmäßiges, linienförmiges Anlegen des Tragelements am Anlegeelement ohne Beschädigungsgefahr für das Tragelement sicherzustellen.

Damit sich das im Sammelraum des Sammelwagens gesammelte Pressgut bei seinem Anheben zum Zweck des Entladens des Sammelwagens nicht an den nicht mit einem Wandbereich des Tragelements überdeckten Wänden des Sammelwagens verhakt oder verklemmt, sind zweckmäßig an dem Sammelwagen zumindest dessen Seitenwände, denen kein Wandbereich des Tragelements zugeordnet ist, innenseitig glattflächig, insbesondere als Kunststoff- oder Blechplatte, ausgebildet oder mit einer glattflächigen Innenauskleidung, insbesondere Kunststoff- oder Blechplatte, versehen. Im Übrigen kann der Sammelwagen dann an sich bekannte, gitterförmige Seitenwände oder sogar nur rahmenartige Seitenwände aufweisen, was zu einem einfachen Aufbau des Sammelwagens und zu dessen geringem Gewicht beiträgt.

Auch besteht die Möglichkeit, schon vorhandene, herkömmliche Sammelwagen, wie sie beispielsweise in Einzelhandelsgeschäften gebräuchlich sind, mit geringem Material- und Zeitaufwand erfindungsgemäß nach- oder umzurüsten, um sie dann als Teil der erfindungsgemäßen Einrichtung zu verwenden.

Ebenfalls aus Gründen eines möglichst geringen Gewichts des Sammelwagens ist bevorzugt das Tragelement durch ein Tuch oder ein Gewebe oder eine Plane oder eine Folie oder ein engmaschiges Netz, insbesondere bei leichtem zu sammelndem Pressgut, oder durch eine Anordnung von rollladenartig gelenkig miteinander verbundenen Profilabschnitten, insbesondere bei schwererem zu sammelndem Pressgut, gebildet.

Zur Verteilung der auf das Tragelement einwirkenden mechanischen Belastungen ist vorgesehen, dass die freie Kante eines Wandbereichs oder mehrerer Wandbereiche oder aller Wandbereiche des Tragelements durch je einen mit dem Tragelement verbundenen stab- oder rohrförmigen Profilabschnitt gebildet oder verstärkt ist.

Alternativ kann die Einrichtung zum Sammeln von Pressgut und zum Zufördern des gesammelten Pressguts zu einer das Pressgut pressenden Presse auch statt mit einem mobilen Sammelwagen mit einem stationären Sammelbehälter, der einen Sammelraum für zu pressendes Pressgut aufweist, und mit einer Pressgutzufördervorrichtung, an welche der Sammelbehälter stationär angebaut ist, ausgeführt sein, wobei der Sammelbehälter einen Boden sowie wenigstens zwei einander gegenüberliegende Seitenwände aufweist und wobei unter Anheben nach oben das zu pressende Pressgut mittels der Pressgutzufördervorrichtung aus dem Sammelbehälter entnehmbar und einem Pressraum oder Pressgutvorratsraum der Presse zuförderbar ist und wobei an oder in dem Sammelbehälter ein bahnförmiges, flexibles oder gelenkiges Tragelement mit einem Bodenbereich und mit wenigstens zwei einander gegenüberliegenden Wandbereichen mit mindestens je einer oberen, freien Kante angeordnet ist, wobei das Tragelement in einer Grundstellung U-förmig parallel oder annähernd parallel zu wenigstens zwei einander gegenüberliegenden Seitenwänden und zu dem Boden des Sammelbehälters verlaufend an diesen anliegt oder wenigstens zwei einander gegenüberliegende Seitenwände und den Boden des Sammelbehälters bildet und wobei zum Zweck des Anhebens des im Sammelbehälter befindlichen, zu pressenden Pressguts das Tragelement von der freien Kante zumindest eines seiner Wandbereiche aus verkürzbar oder anhebbar ist.

In weiterer Ausgestaltung dieser alternativen Einrichtung ist vorgesehen, dass sie die Merkmale eines oder mehrerer der Ansprüche 2 bis 20 aufweist und dass dabei der an die Pressgutzufördervorrichtung andockbare verfahrbare Sammelwagen durch den an die Pressgutzufördervorrichtung stationär angebauten Sammelbehälter ersetzt ist.

Alle mit dem verstellbaren Tragelement verbundenen, vorstehend beschriebenen Vorteile werden so auch bei der mit dem stationär angebauten Sammelbehälter ausgeführten Einrichtung erreicht.

Zur Lösung des zweiten, den Sammelwagen zur Verwendung in der vorstehend beschriebenen Einrichtung betreffenden Teils der Aufgabe wird ein Sammelwagen vorgeschlagen, der einen Sammelraum für zu pressendes Pressgut aufweist und an eine Pressgutzufördervorrichtung einer Presse andockbar ist, wobei der Sammelwagen einen Boden und eine unterseitigen Räderanordnung sowie wenigstens zwei einander gegenüberliegende Seitenwände aufweist und wobei unter Anheben nach oben das zu pressende Pressgut mittels der Pressgutzufördervorrichtung aus dem Sammelwagen entnehmbar und einem Pressraum oder Pressgutvorratsraum der Presse zuförderbar ist.

Der erfindungsgemäße Sammelwagen ist dadurch gekennzeichnet,
- dass an oder in dem Sammelwagen ein bahnförmiges, flexibles oder gelenkiges Tragelement mit einem Bodenbereich und mit wenigstens zwei einander gegenüberliegenden Wandbereichen mit mindestens je einer oberen, freien Kante angeordnet ist,
- dass das Tragelement in einer Grundstellung U-förmig parallel oder annähernd parallel zu wenigstens zwei einander gegenüberliegenden Seitenwänden und zu dem Boden des Sammelwagens verlaufend an diesen anliegt oder wenigstens zwei einander gegenüberliegende Seitenwände und den Boden des Sammelwagens bildet und
- dass zum Zweck des Anhebens des im Sammelwagen befindlichen, zu pressenden Pressguts das Tragelement von der freien Kante zumindest eines seiner Wandbereiche aus verkürzbar oder anhebbar ist.

Mit dem erfindungsgemäßen Sammelwagen werden die vorstehend schon im Zusammenhang mit der gesamten Einrichtung erläuterten Vorteile erzielt, weshalb diesbezüglich auf die vorstehende Beschreibung verwiesen wird.

Bevorzugt ist an der freien Kante eines der Wandbereiche des Tragelements eine Wickelwelle angeordnet, die in eine das Tragelement aufwickelnde Drehung versetzbar ist.

Alternativ dazu kann an der freien Kante zweier einander gegenüberliegender Wandbereiche des bahnförmigen Tragelements je eine Wickelwelle angeordnet sein, die in eine das Tragelement aufwickelnde synchrone oder annähernd synchrone Drehung versetzbar sind.

Bei einer anderen Ausführung des Sammelwagens ist ein fester Oberrand des Sammelwagens als Umlenkelement ausgebildet ist, über welches der eine Wandbereich des Tragelements um 180° umgelenkt ist, wobei die freie Kante des umgelenkten Wandbereichs des Tragelements aus dessen Grundstellung in eine Bewegung nach unten versetzbar ist.

Alternativ dazu können zwei einander gegenüberliegende feste Oberränder des Sammelwagens jeweils als Umlenkelement ausgebildet sein, über welche zwei einander gegenüberliegende Wandbereiche des Tragelements jeweils um 180° umgelenkt sind, wobei die freien Kanten der umgelenkten Wandbereiche des Tragelements aus dessen Grundstellung jeweils in eine synchrone oder annähernd synchrone Bewegung nach unten versetzbar sind.

Gemäß einer weiteren Alternative ist vorgesehen, dass das Tragelement neben seinem Bodenbereich vier mit dem Bodenbereich verbundene oder einstückige, untereinander nicht unmittelbar verbundene Wandbereichen mit je einer oberen, freien Kante aufweist und dass vier feste Oberränder des Sammelwagens jeweils als Umlenkelement ausgebildet sind, über welche die Wandbereiche des Tragelements jeweils um 180° umgelenkt sind, wobei die freien Kanten der umgelenkten Wandbereiche des Tragelements aus dessen Grundstellung jeweils in eine synchrone oder annähernd synchrone Bewegung nach unten versetzbar sind.

Eine noch weitere Alternative des Sammelwagens ist dadurch gekennzeichnet, dass das Tragelement an der freien Kante eines ersten Wandbereichs verschwenkbar an einem Oberrand des Sammelwagens angelenkt ist, dass ausgehend von der freien Kante dieses ersten Wandbereichs ein Wandbereichsabschnitt, dessen Fläche im Wesentlichen oder annähernd der Querschnittsfläche des Sammelraums des Sammelwagens entspricht, als starre Fläche ausgebildet ist und dass das Tragelement von der freien Kante eines dem ersten Wandbereich gegenüberliegenden zweiten Wandbereichs aus verkürzbar oder anhebbar ist. Auch bei diesem Sammelwagen kann das darin gesammelte, zu pressende Pressgut zuverlässig nach und nach angehoben und so in Eingriff mit der Pressgutzuführeinrichtung gebracht werden.

Eine Weiterbildung dazu schlägt vor, dass die freie Kante des zweiten Wandbereichs des Tragelements lösbar mit dem zugehörigen Oberrand des Sammelwagens verbunden ist und dass mittels einer Zugeinrichtung oder einer Wickeleinrichtung, mit der die freie Kante des zweiten Wandbereichs des Tragelements in Eingriff bringbar ist, das Tragelement nach oben hin oder unter Umlenkung über den Oberrand des Tragwagens nach unten hin ziehbar oder aufwickelbar ist.

Weiter ist bevorzugt vorgesehen, dass in einer Anhebe-Endposition des Tragelements dessen starrer Wandbereichsabschnitt den Querschnitt des Sammelraums des Sammelwagens im Wesentlichen oder annähernd überdeckt und eine horizontale Lage oder eine in Entnahmerichtung des zu pressenden Pressguts abwärts oder aufwärts geneigte Lage einnimmt.

Die Umlenkelemente können z.B. glattflächige Streben oder Profile sein, über die die Wandbereiche des Tragelements bei dessen Bewegung reibungsarm hinweggleiten, oder sie können ein- oder mehrteilige drehbar gelagerte Rollen sein, die sich bei der Bewegung der Wandbereiche des Tragelements unter diesen drehen.

Vorzugsweise ist weiterhin an dem Sammelwagen eine das Tragelement mit einer in Richtung zu dessen Grundstellung wirkenden Kraft vorbelastende Rückstellvorrichtung angeordnet.

Dazu können in oder an den Bereichen des Tragelements, die in dessen Grundstellung unteren Ecken des Sammelraums am nächsten liegen, ein Rückführen des Tragelements in seine Grundstellung beim Absenken des Tragelements aus einer angehobenen Stellung bewirkende oder unterstützende Beschwerungsgewichte als Rückstellvorrichtung eingearbeitet oder angebracht sein.

Alternativ weist die Rückstellvorrichtung eine die vorbelastende Kraft erzeugende Spannfederanordnung auf, die unmittelbar oder über flexible Zugmittel an zwei oder mehr Punkten in Übergangsbereichen zwischen den Wandbereichen und dem Bodenbereich des Tragelements angreift.

Die Erfindung sieht weiter vor, dass an dem Sammelwagen zumindest dessen Seitenwände, denen kein Wandbereich des Tragelements zugeordnet ist, innenseitig glattflächig, insbesondere als Kunststoff- oder Blechplatte, ausgebildet oder mit einer glattflächigen Innenauskleidung, insbesondere Kunststoff- oder Blechplatte, versehen sind.

Vorzugsweise ist das Tragelement durch ein Tuch oder ein Gewebe oder eine Plane oder eine Folie oder ein engmaschiges Netz oder durch eine Anordnung von rollladenartig gelenkig miteinander verbundenen Profilabschnitten gebildet.

Schließlich ist erfindungsgemäß für den Sammelwagen vorgesehen, dass die freie Kante eines Wandbereichs oder mehrerer Wandbereiche oder aller Wandbereiche des Tragelements durch je einen mit dem Tragelement verbundenen stab- oder rohrförmigen Profilabschnitt gebildet oder verstärkt ist.

Nachfolgend werden Ausführungsbeispiele der Erfindung anhand einer Zeichnung erläutert. Die Figuren der Zeichnung zeigen:
- Figur 1: einen Sammelwagen mit einem Tragelement in auseinandergezogener Ansicht schräg von oben, zusammen mit einem vergrößerten Detail, als Teil der Einrichtung, in einer ersten Ausführung,
- Figur 2: die Einrichtung in einer Teil-Seitenansicht, mit einem an eine Pressgutzufördervorrichtung angedockten Sammelwagen gemäß Figur 1, von dem hier nur ein oberer Teil dargestellt ist, in einem ersten Betriebszustand,
- Figur 3: die Einrichtung aus Figur 2 in gleicher Darstellung, in einem zweiten Betriebszustand,
- Figur 4: den Sammelwagen in einer zweiten Ausführung, in an die Pressgutzufördervorrichtung angedocktem Zustand, zusammen mit zwei vergrößerten Details, in Ansicht schräg von oben,
- Figur 5: die Einrichtung insgesamt in einem an eine Presse angebauten Zustand, mit einem noch nicht an die Pressgutzufördervorrichtung angedockten Sammelwagen, in einer weiteren Ausführung, in Ansicht schräg von oben,
- Figur 6: die Einrichtung aus Figur 5 mit an die hier ausschnittsweise dargestellte Pressgutzufördervorrichtung angekoppeltem Sammelwagen, in einem ersten Betriebszustand, in Ansicht schräg von oben,
- Figur 7: die Einrichtung aus Figur 6 in gleicher Darstellung, in einem zweiten Betriebszustand,
- Figur 8: die Einrichtung aus Figur 6 und 7 in gleicher Darstellung, in einem dritten Betriebszustand,
- Figur 9: die Einrichtung insgesamt in einem an eine Presse angebauten Zustand, mit einem noch nicht an die Pressgutzufördervorrichtung angedockten Sammelwagen, in einer weiteren Ausführung, in einem schematischen Längsschnitt,
- Figur 10: die Einrichtung aus Figur 9 in einer längs geschnittenen schematischen Ansicht schräg von oben,
- Figur 11: die Einrichtung aus Figur 9 und 10 mit an die Pressgutzufördervorrichtung angedocktem Sammelwagen, in einem ersten Betriebszustand, in einem schematischen Längsschnitt,
- Figur 12: die Einrichtung aus Figur 11 in einer längs geschnittenen schematischen Ansicht schräg von oben,
- Figur 13: die Einrichtung aus Figur 9 und 10 mit an die Pressgutzufördervorrichtung angedocktem Sammelwagen, in einem zweiten Betriebszustand, in einem schematischen Längsschnitt,
- Figur 14: die Einrichtung in einer weiteren Ausführung, im an eine Presse angebauten Zustand und mit einem noch nicht angedockten Sammelwagen, in einer Seitenansicht schräg von vorn,
- Figur 15: die Einrichtung aus Figur 14 mit nun angedocktem, bereits teilweise von zu pressendem Pressgut entleerten Sammelwagen, in Seitenansicht,
- Figur 16: die Einrichtung aus den Figuren 14 und 15, nun mit fast vollständig entleertem Sammelwagen, in Seitenansicht,
- Figur 17: ein Details aus der Figur 15 in vergrößerter Darstellung,
- Figur 18: die Einrichtung in einer weiteren Ausführung, im an eine Presse angebauten Zustand und mit einem angedockten, bereits zu einem kleinen Teil von zu pressendem Pressgut entleerten Sammelwagen, in einer Seitenansicht,
- Figur 19: den Sammelwagen der Einrichtung aus Figur 18 als Einzelteil in Ansicht,
- Figur 20: ein Detail aus der Figur 18 in vergrößerter Darstellung und
- Figur 21: die Einrichtung in einer weiteren Ausführung, im an eine Presse angebauten Zustand und mit einem stationär angebauten, bereits zu einem kleinen Teil von zu pressendem Pressgut entleerten Sammelbehälter, in einer Seitenansicht.

In der folgenden Figurenbeschreibung sind gleiche Teile in den verschiedenen Zeichnungsfiguren stets mit den gleichen Bezugszeichen versehen, sodass nicht zu jeder Zeichnungsfigur alle Bezugszeichen erneut erläutert werden müssen.

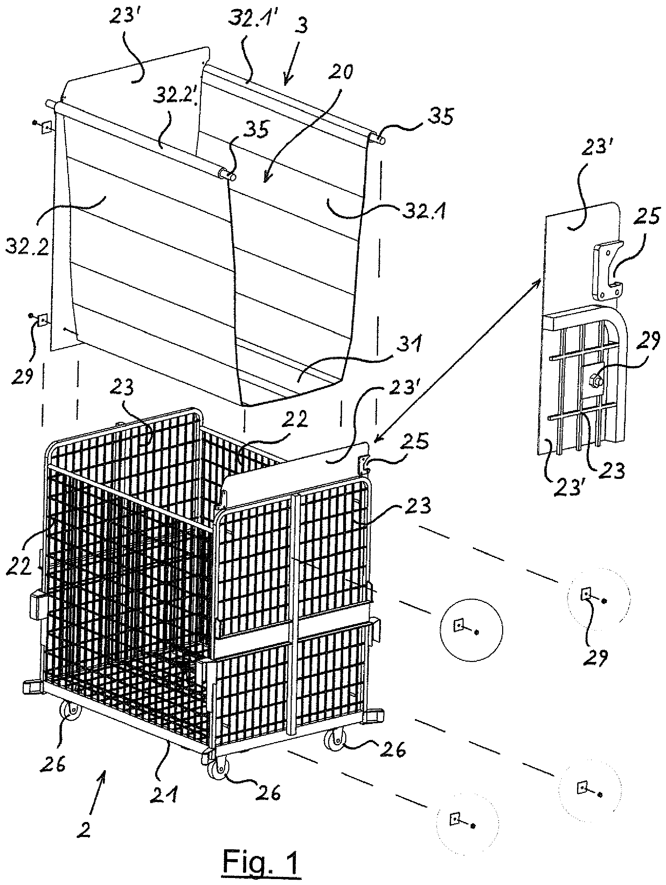

Figur 1 zeigt einen Sammelwagen 2 mit einem Tragelement 3 in auseinandergezogener Ansicht schräg von oben, zusammen mit einem vergrößerten Detail, als Teil einer Einrichtung zum Sammeln von Pressgut und zum Zufördern des gesammelten Pressguts zu einer das Pressgut pressenden Presse, in einer ersten Ausführung.

Der Sammelwagen 2 besteht hier aus einem gitterförmigen Boden 21, zwei einander gegenüberliegenden ersten Seitenwänden 22 und zwei einander gegenüberliegenden zweiten Seitenwänden 23, wobei hier die Seitenwände 22, 23 ebenfalls gitterförmig sind. An seiner Unterseite besitzt der Sammelwagen 2 eine Räderanordnung 26 aus insgesamt vier Rädern oder Rollen, von denen vorzugsweise zwei lenkbar sind. Der Sammelwagen 2 ist mittels einer Bedienungsperson verfahrbar, beispielsweise in einem Supermarkt, um leere Verpackungen oder andere Reststoffe zu sammeln und dann einer Presse zum Herstellen von Pressballen zuzuführen.

Im Unterschied zu herkömmlichen derartigen Sammelwagen 2 ist bei dem dargestellten Sammelwagen 2 ein zusätzliches Tragelement 3 vorgesehen, welches in den Sammelwagen 2 eingebaut wird. Das Tragelement 3 besteht aus einem bahnförmigen flexiblen Material, wie Gewebe, Folie oder Plane, und besitzt einen unten liegenden Bodenbereich 31 sowie zwei einstückig mit diesem ausgebildete Wandbereiche 32.1, 32.2. Die hier oberen, freien Ränder oder Kanten 32,1', 32.2' der Wandbereiche 32.1, 32.2 des Tragelements 3 sind an je einer Wickelwelle 35 angebracht.

Weiterhin ist hier vorgesehen, innenseitig an den beiden einander gegenüberliegenden zweiten Seitenwänden 23 des Sammelwagens 2 je eine glattflächige Innenauskleidung 23', beispielsweise eine Kunststoff- oder Blechplatte, anzubringen, wofür Verbindungselemente 29, hier in Form von Unterlegscheiben und Schrauben mit Muttern, vorgesehen sind.

An den zwei seitlichen oberen Endbereichen jeder Innenauskleidung 23' ist jeweils eine Wellenaufnahme 25 angeordnet, die jeweils paarweise zur Aufnahme und Lagerung je einer der beiden Wickelwellen 35 des Tragelements 3 dienen. Ganz rechts in Figur 1 ist der rechte obere Endbereich der dem Betrachter zugewandten Seitenwand 23 des Sammelwagens 2 in einem vergrößerten Detail, mit der zugehörigen Innenauskleidung 23', mit einer der Wellenaufnahmen 25 und mit einem der Verbindungsmittel 29, dargestellt.

Im zusammengebauten Zustand des Sammelwagens 2 verläuft der Bodenbereich 31 des Tragelements 3 entlang der Oberseite des Bodens 21 des Sammelwagens 2 und die beiden Wandbereiche 32.1, 32.2 des Tragelements 3 verlaufen parallel zu den ersten Seitenwänden 22 des Sammelwagens 2. In diesem Zustand des Sammelwagens 2 kann in dessen Sammelraum 20 zu pressendes Pressgut, wie Papier, Pappe, Kartonagen und dergleichen, wie sie beispielsweise in einem Supermarkt anfallen, gesammelt werden.

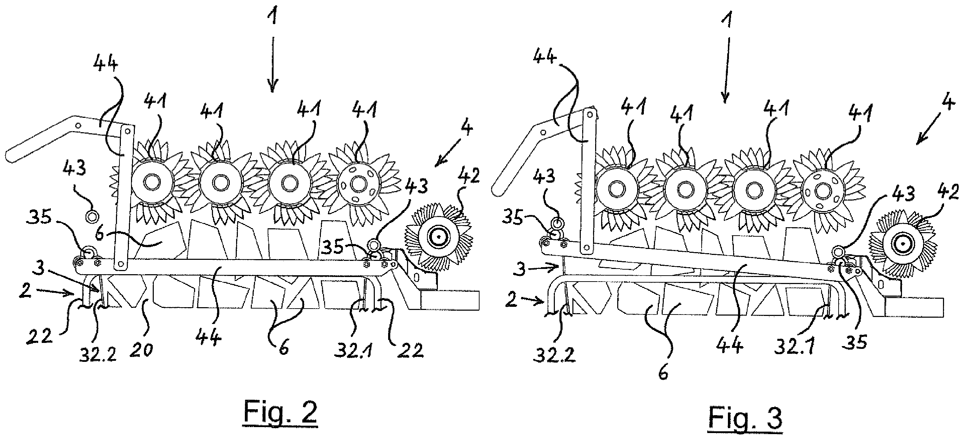

Die Figuren 2 und 3 zeigen die Einrichtung 1 in einer Teil-Seitenansicht, mit einem an eine Pressgutzufördervorrichtung 4 angedockten Sammelwagen 2 gemäß Figur 1, von dem hier nur ein oberer Teil dargestellt ist, in zwei verschiedenen Betriebszuständen. Die Pressgutzufördervorrichtung 4 besitzt eine Hubarmanordnung 44, die mittels eines hier nicht dargestellten Kraftantriebes an ihrem in den Figuren 2 und 3 linken Ende nach oben und unten verschwenkbar ist.

Weiterhin besitzt die Pressgutzufördervorrichtung 4 zwei drehantreibbare Antriebselemente 43, die, je nach Schwenkstellung der Hubarmanordnung 44, wahlweise außer Antriebseingriff mit den Wickelwellen 35, wie in Figur 2 gezeigt, oder in Antriebseingriff mit den Wickelwellen 35, wie in Figur 3 gezeigt, stehen.

Bei dem Ausführungsbeispiel nach den Figuren 2 und 3 werden die beiden Wickelwellen 35 zum Zweck des Entleerens des Sammelwagens 2 mittels der Antriebselemente 43 in gegensinnige Drehung versetzt, wodurch das bahnförmige Tragelement 3, von seinen beiden freien Kanten 23' ausgehend, auf die Wickelwellen 35 nach und nach aufgewickelt wird. Hierdurch wird das im Sammelraum 20 des Sammelwagens 2 befindliches Pressgut 6 nach oben hin bewegt, so dass es nach und nach von einer Anordnung aus mehreren, hier vier, Zuführwalzen 41 erfasst und nach rechts in Richtung zu einem Befüllrotor 42 transportiert werden kann. Der Befüllrotor 42 fördert das zu pressende Pressgut 6 durch seine Drehung in an sich bekannter Art und Weise in den Pressraum einer hier nicht dargestellten, der Einrichtung 1 nachgeschalteten Presse.

Nach einem vollständigen Entleeren des Sammelwagens 2 wird dessen Tragelement 3 durch Abwickeln der Wandbereiche 32.1, 32.2 von den Wickelwellen 35 wieder in seine für ein erneutes Sammeln von Pressgut 6 geeignete Grundstellung zurückgeführt. Nach Abkoppeln von der Pressgutzufördervorrichtung 4 kann der Sammelwagen 2 wieder zu vorgesehenen Positionen, an denen Pressgut gesammelt werden soll, verfahren werden.

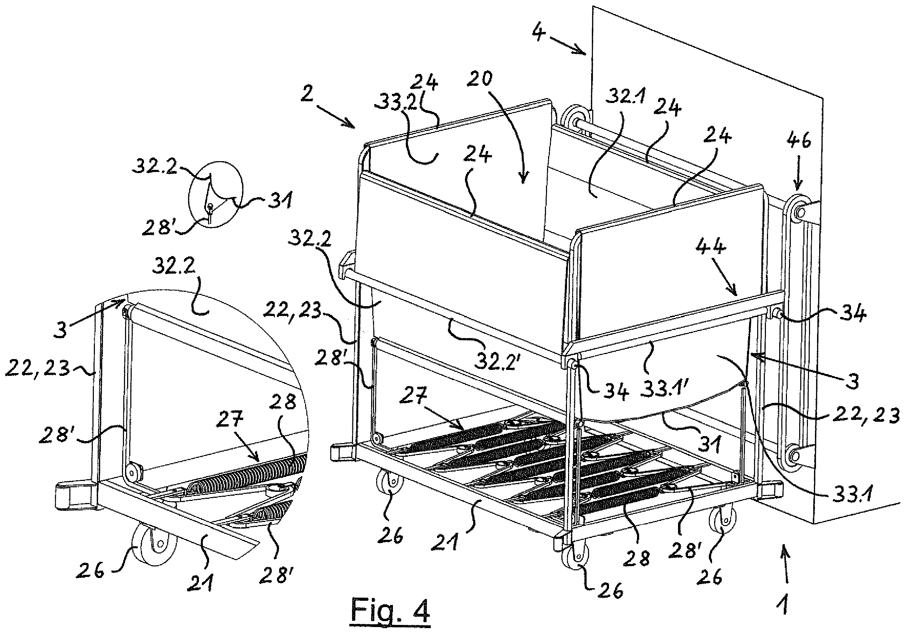

Figur 4 zeigt den Sammelwagen 2 in einer zweiten Ausführung, in an die Pressgutzufördervorrichtung 4 angedocktem Zustand, zusammen mit zwei vergrößerten Details, in Ansicht schräg von oben. Charakteristisch für diesen Sammelwagen 2 sind zwei Aspekte. Zum einen besitzt der Sammelwagen 2 hier ein Tragelement 3, welches neben seinem Bodenbereich 31 und seinen ersten und zweiten Wandbereichen 32.1, 32.2 zusätzlich zwei weitere Wandbereiche 33.1, 33.2 aufweist, so dass der Sammelraum 20 des Sammelwagens 2 hier vollständig von dem Tragelement 3 begrenzt wird. Zum anderen ist bei dem Sammelwagen 2 eine Rückstellvorrichtung 27 vorgesehen, welche eine zuverlässige Rückführung des Tragelements 3 in seine Grundstellung nach einem Entleeren des Sammelwagens 2 bewirkt.

Eine weitere Eigenart dieser Ausführung des Sammelwagens 2 besteht darin, dass die Seitenwände 22, 23 des Sammelwagens 2 nur durch einige Streben gebildet sind und jeweils einen Oberrand 24 aufweisen, über welche die ersten und zweiten Wandbereiche 32.1, 32.2, 33.1, 33.2 des Tragelements 3 um 180° nach außen und unten hin umgelenkt sind.

Die ganz rechts in Figur 4 teilweise sichtbare Pressgutzufördervorrichtung 4 umfasst hier eine Hubarmanordnung 44, welche zwei etwa horizontal frei vorragende Arme aufweist, die sich links und rechts von dem an die Pressgutzufördervorrichtung 4 angedockten Sammelwagen 2 erstrecken. Vorne und hinten steht die Hubarmanordnung 44 in Eingriff mit vier Profilabschnitten 34, hier in Stangenform, welche entlang der freien Kanten 32.1', 32.2', 33.1', 33.2' der vier Wandbereiche 32.1, 32.2, 33.1, 33.2 verlaufen. Durch Bewegen der Arme der Hubarmanordnung 44 mittels eines Antriebes 46 nach unten werden die freien Kanten 32.1', 32.2', 33.1', 33.2' der Wandbereiche 32.1, 32.2, 33.1, 33.2 des Tragelements 3 nach unten gezogen, wodurch sich mittels der Umlenkungen der Wandbereiche 32.1, 32.2, 33.1, 33.2 über die Oberränder 24 ein Anheben des Bodenbereichs 31 des Tragelements 3 ergibt. Somit kann auch bei diesem Sammelwagen 2 in diesem gesammeltes Pressgut nach und nach aufwärts bewegt und an hier nicht dargestellte, oberhalb des an die Pressgutzufördervorrichtung 4 angedockten Sammelwagens 2 befindliche Förderelemente, wie die Zuführwalzen 41 nach Figur 2 und 3, übergeben werden.

Die erwähnte Rückstellvorrichtung 27 zum Zurückführen des Tragelements 3 nach einem Entleeren des Sammelwagens 2 ist in Höhe des Bodens 21 des Sammelwagens 2 angeordnet und besteht aus einer Spannfederanordnung 28 und Zugmitteln 28'. Beim Anheben des Bodenbereichs 31 des Tragelements 3 wird die Spannfederanordnung 28 über die mit den Rändern des Bodenbereich 31 unterseitig verbundenen Zugmittel 28' gespannt. Das Rückführen des Tragelements 3 in seine Grundstellung erfolgt dann durch die Kraft der gespannten Spannfederanordnung 28 und über die unterseitig an den Rändern des Bodenbereich 31 des Tragelements 3 angreifenden Zugmittel 28'.

An der Unterseite des Bodens 21 des Sammelwagens 2 ist auch hier wieder eine Räderanordnung 26 zum manuellen Verfahren des Sammelwagens 2 vorgesehen.

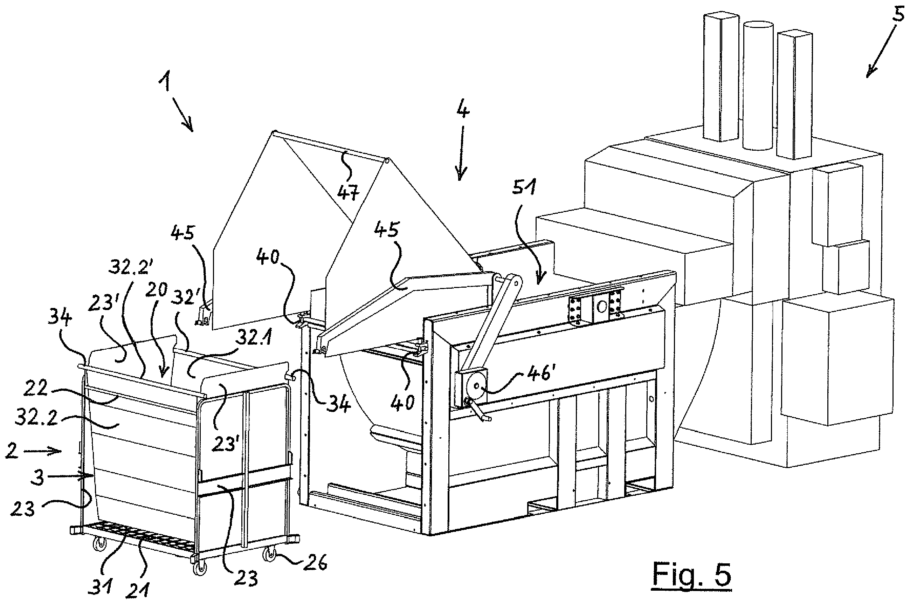

Figur 5 zeigt die Einrichtung 1 insgesamt in einem an eine Presse 5 angebauten Zustand, mit einem noch nicht an die Pressgutzufördervorrichtung 4 angedockten Sammelwagen 2, in einer weiteren Ausführung, in Ansicht schräg von oben.

Der Sammelwagen 2 besitzt hier wieder einen gitterförmigen Boden 21 mit einer unterseitigen Räderanordnung 26 sowie durch nur wenige Streben gebildete erste und zweite Seitenwände 22, 23. In den Sammelwagen 2 ist das Tragelement 3 eingesetzt, das hier wieder bahnförmig mit einem unteren Bodenbereich 31 und zwei sich von diesem einstückig nach oben erstreckenden ersten und zweiten Wandbereichen 32.1, 32.2 ausgebildet ist, die entlang der ersten Seitenwände 22 des Sammelwagens 2 verlaufen. Die beiden zweiten Seitenwände 23 des Sammelwagens 2 sind hier wieder durch glattflächige Innenauskleidungen 23' abgedeckt. Diese Innenauskleidung 23' bilden zusammen mit den Wandbereichen 32.1, 32.2 des Tragelements 3 den Sammelraum 20 des Sammelwagens 2 und verhindert ein Verhaken oder Verklemmen des Tragelements 3 und von Teilen des Pressguts bei dessen Anheben zum Zweck des Entleerens des Sammelwagens 2, wie es bei grob gitterförmig ausgeführten Seitenwänden 23 auftreten könnte.

An den freien Kanten 32.1', 32.2' der Wandbereiche 32.1, 32.2 sind zwei stangenförmige oder rohrförmige Profilabschnitte 34 angebracht, die mit ihren Enden in je zwei Aufnahmen im oberen seitlichen Bereich der zwei Innenauskleidungen 23' an den beiden zweiten Seitenwänden 23 des Sammelwagens 2 liegen.

An ihrer dem anzudockenden Sammelwagen 2 zugewandten Stirnseite besitzt die Pressgutzufördervorrichtung 4 zwei Andockelemente 40, die hier zum Zusammenwirken mit den seitlichen Enden des der Pressgutzufördervorrichtung 4 zugewandten Profilabschnitts 34 des Sammelwagens 2 ausgebildet sind.

Die Pressgutzufördervorrichtung 4 besitzt weiter eine zweiarmiger Hebelarmanordnung 45, die aus einer in Figur 5 gezeigten Grundstellung durch einen Antrieb 46' nach oben verschwenkbar ist. Zwischen den Armen der Hebearmanordnung 45 ist in einer erhöhten Position und quer zu den Armen verlaufend ein ortsfestes, stangenförmiges Anlegeelement 47 angeordnet.

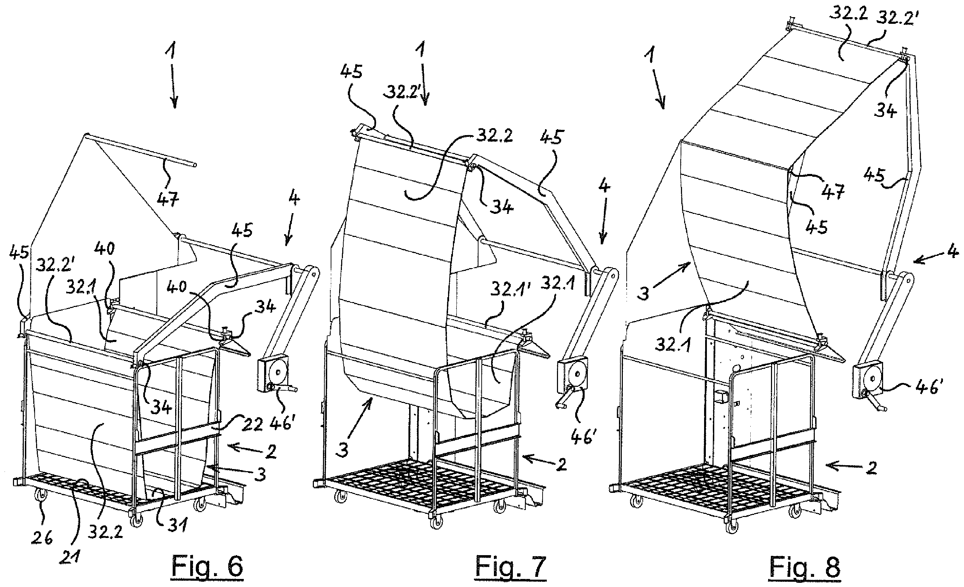

Weiterhin umfasst die Pressgutzufördervorrichtung 4 hier einen Pressgutvorratsraum 51, in welchen das im Sammelwagen 2 gesammelte Pressgut zunächst überführbar ist, wie anhand der Figuren 6 bis 8 näher erläutert wird.

Mit ihren freien Enden ist bei angedocktem Sammelwagen 2 die Hebearmanordnung 45 mit dem von der Pressgutzufördervorrichtung 4 entfernt liegenden Profilabschnitt 34 des Tragelements 3 in Eingriff bringbar, wie in Figur 6 sichtbar ist, welche die Einrichtung 1 aus Figur 5 mit an die hier ausschnittsweise dargestellte Pressgutzufördervorrichtung 4 angekoppeltem Sammelwagen 2, in einem ersten Betriebszustand, in Ansicht schräg von oben, zeigt. Der Sammelwagen 2 ist nun mittels der Andockelemente 40 an die Pressgutzufördervorrichtung 4 angedockt und die freien Enden der Hebearmanordnung 45 stehen in Eingriff mit dem Profilabschnitt 34 an der von der Pressgutzufördervorrichtung 4 entfernt liegenden freien Kante 32.2' des Wandbereichs 32.2 des Tragelements 3.

Figur 7 zeigt die Einrichtung aus Figur 6 in gleicher Darstellung, in einem zweiten Betriebszustand, in welchem mittels des Antriebs 46' die Hebearmanordnung 45 um einen gewissen Winkel nach oben hin verschwenkt ist. Bei dieser Schwenkbewegung der Hebearmanordnung 45 wird die mit dieser in Eingriff stehende freie Kante 32.2' das Tragelements 3 mitgenommen und nach oben bewegt, wodurch das Tragelement 3 insgesamt innerhalb des Sammelwagens 2 angehoben wird. Auf diese Weise wird im Sammelwagen 2 befindliches, hier nicht dargestelltes Pressgut angehoben und ohne zusätzliche Förderelemente an dieser Stelle über die der Pressgutzufördervorrichtung 4 zugewandte freie Kante 32.1' des Tragelements 3 hinweg in den in Figur 5 sichtbaren Pressgutvorratsraum 51 überführt.

Figur 8 zeigt die Einrichtung 1 aus Figur 6 und 7 in gleicher Darstellung, in einem dritten Betriebszustand, in welchem die Hebearmanordnung 44 ihre obere Endstellung erreicht hat. In dieser Stellung ist das Tragelement 3 vollständig aus dem übrigen Sammelwagen 2 nach oben hin herausgehoben und in seinem etwa mittleren Bereich unter Abwinklung an das Anlegeelement 47 angelegt. In diesem Betriebszustand bildet das Tragelement 3 unterhalb des Anlegeelements 47 eine zur Pressgutzufördervorrichtung 4 hin abwärts geneigte Pressgutrutschfläche, über welche das zuvor im Sammelwagen 2 gesammelte Pressgut mittels Schwerkraftwirkung nach unten rutscht.

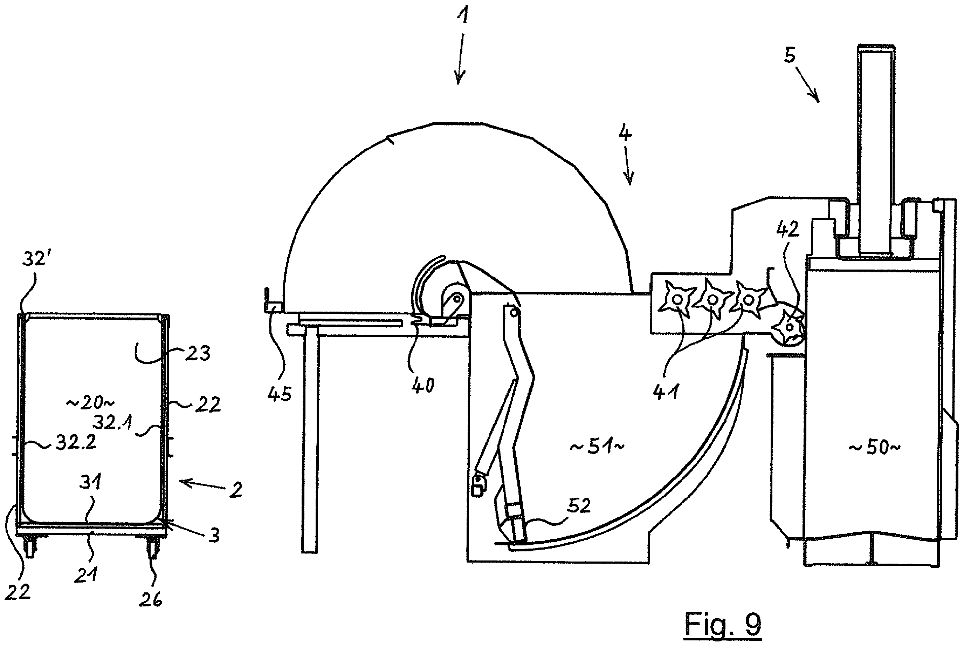

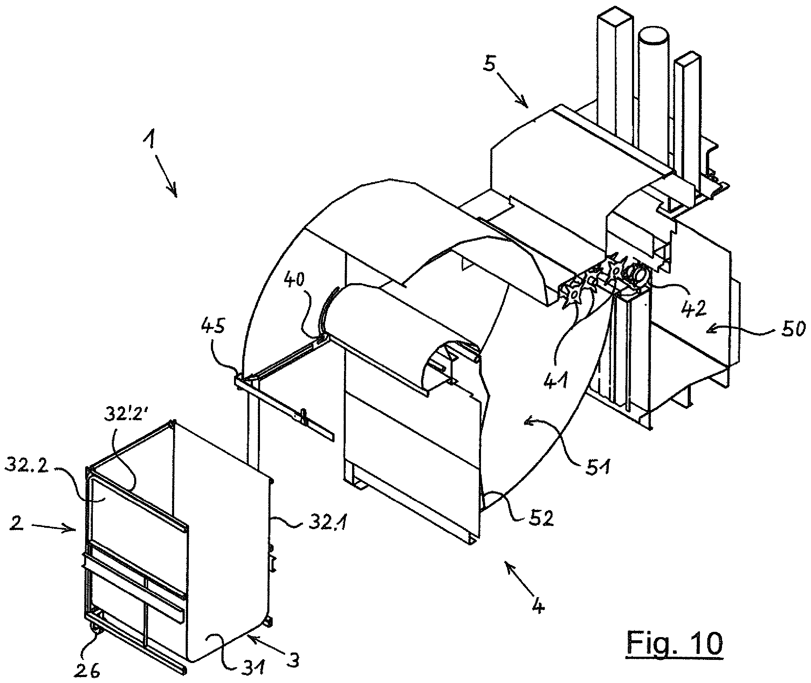

Die Figuren 9 und 10 zeigen die Einrichtung 1 insgesamt in einem an eine Presse 5 angesetzten Zustand, mit einem noch nicht an die Pressgutzufördervorrichtung 4 angedockten Sammelwagen 2, in einer weiteren Ausführung, einmal in einem schematischen Längsschnitt und einmal in einer längs geschnittenen schematischen Ansicht schräg von oben.

Links in Figur 9 und Figur 10 ist der noch nicht an die Pressgutzufördervorrichtung 4 angedockte, einen Teil der Einrichtung 1 bildende Sammelwagen 2 mit seinen schon zuvor beschriebenen Einzelteilen sichtbar. Nach rechts schließt sich daran die Pressgutzufördervorrichtung 4 als weiterer Teil der Einrichtung 1 an. Die Pressgutzufördervorrichtung 1 besitzt auch hier eine Hebearmanordnung 45, die größtenteils verdeckt ist. Weiterhin besitzt die Pressgutzufördervorrichtung 4 auch hier zwei Andockelemente 40 für den Sammelwagen 2, von denen nur eines sichtbar ist.

An der von dem Sammelwagen 2 abgewandten Seite der Pressgutzufördervorrichtung 4 ist ein Pressgutvorratsraum 51 mit einem gebogenen Boden angeordnet, über welchen ein Förderpendel 52 mittels eines hier nicht sichtbaren Kraftantriebes hin und her verschwenkbar ist. Im oberen rechten Endbereich des Pressgutvorratsraums 51 ist eine Anordnung von drehantreibbaren Zuführwalzen 41 vorgesehen, an welche sich noch weiter nach rechts hinein Befüllrotor 42 anschließt, mittels welchem zu pressendes Pressgut in einen Pressraum 50 der nachgeschalteten Presse 5 förderbar ist.

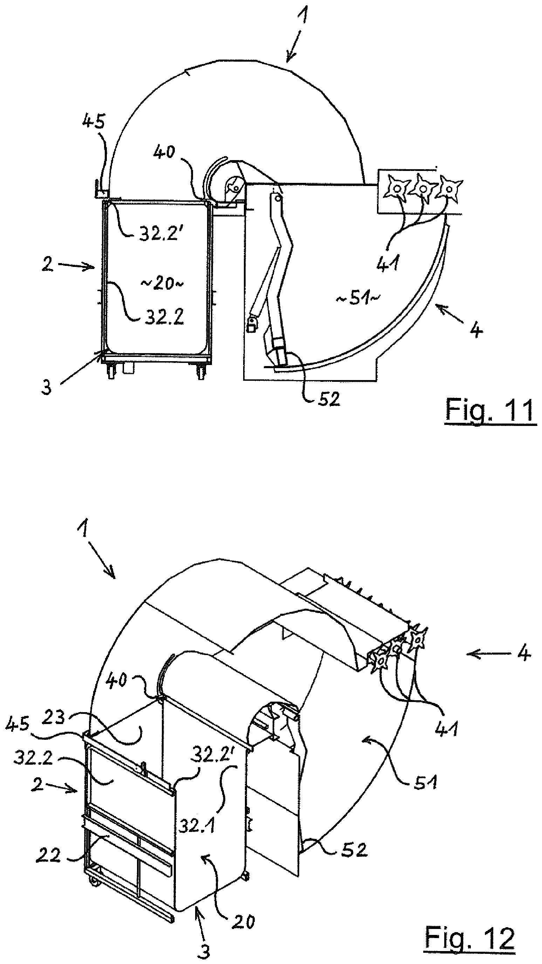

Die Figuren 11 und 12 zeigen die Einrichtung 1 aus Figur 9 und 10 mit an die Pressgutzufördervorrichtung 4 angedocktem Sammelwagen 2, in einem ersten Betriebszustand, einmal in einem schematischen Längsschnitt und einmal in einer längs geschnittenen schematischen Ansicht schräg von oben. Der Sammelwagen 2 ist nun mittels der Andockelemente 40 mit der Pressgutzufördervorrichtung 4 mechanisch verbunden und in seiner Position fixiert. Die Hebearmanordnung 45 ist mit der freien Kante 32.2' des von der Pressgutzufördervorrichtung 4 entfernten ersten Wandbereichs 32.2 des Tragelements 3 in Eingriff getreten. Das Tragelement 3 mit dem im Sammelraum 20 befindlichen, hier nicht dargestellten Pressgut befindet sich noch vollständig innerhalb des Sammelwagens 2, da hier die Hebearmanordnung 45 noch nicht nach oben hin verschwenkt ist.

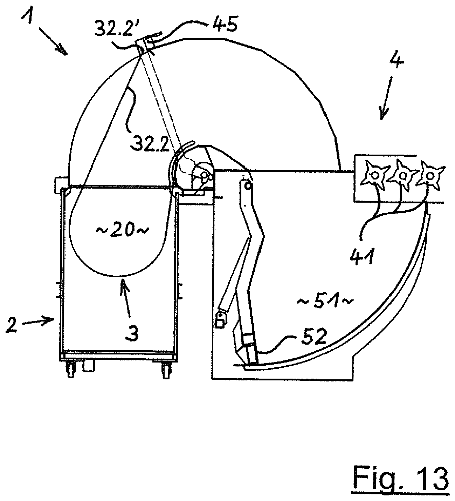

Figur 13 zeigt die Einrichtung 1 aus Figur 9 bis 12 mit an die Pressgutzufördervorrichtung 4 angedocktem Sammelwagen 2, in einem zweiten Betriebszustand, in einem schematischen Längsschnitt. In diesem Betriebszustand wird die Hebearmanordnung 45 nach oben hin verschwenkt, wobei sie die mit ihr in Eingriff stehende freie Kante 32.2' und damit das Tragelement 3 mit nach oben nimmt. In Figur 13 ist dabei eine Zwischenstellung der Hebearmanordnung 45 und des Tragelements 3 gezeigt.

Am Ende der Schwenkbewegung der Hebearmanordnung 45 weist diese in Richtung zur Pressgutzufördervorrichtung 4 und zu den daran angeordneten Zuführwalzen 41, wobei dann das Tragelement 3 vollständig aus dem Sammelwagen 2 herausgehoben ist. Dadurch wird das im Sammelwagen 2 gesammelte, hier nicht dargestellte Pressgut aus dem Sammelraum 20 des Sammelwagens 2 nach oben und, gemäß Figur 13, nach rechts ohne weitere Fördermittel in den Pressgutvorratsraum 51 gefördert, in welchen das Pressgut durch Schwerkraftwirkung hineinfällt.

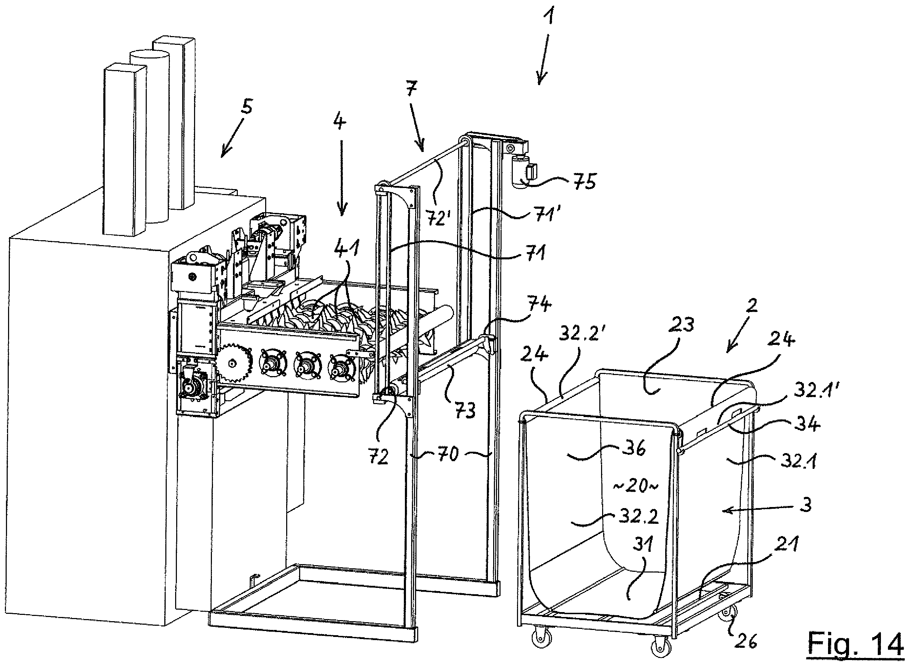

Figur 14 zeigt die Einrichtung 1 in einer weiteren Ausführung, im an eine Presse 5 angebauten Zustand und mit einem noch nicht angedockten Sammelwagen 2, in einer Seitenansicht schräg von vorn. Der Sammelwagen 2 besitzt auch hier einen Sammelraum 20, der an zwei einander gegenüberliegenden Seiten und unten durch das Tragelement 3 begrenzt ist. An der in Figur 14 hinteren Seite des Sammelwagens 2 ist eine feste Seitenwand 23 angeordnet. An der vorderen Seite des Sammelwagens 2 ist der Praxis ebenfalls eine Seitenwand 23 angeordnet, hier aus Gründen der Erkennbarkeit des Tragelements 3 aber weggelassen. Das Tragelement 3 besteht aus zwei einander gegenüberliegenden ersten und zweiten Wandbereichen 32.1, 32.2 sowie einem Bodenbereich 31.

Der obere Teil des zweiten Wandbereichs 32.2 ist hier durch einen starren Wandbereichsabschnitt 36 gebildet, beispielsweise in Form einer leichten Platte aus Kunststoff, die Teil des Tragelements 3 ist und mit dem übrigen Tragelement 3 verbunden ist. Die nicht durch den starren Wandbereichsabschnitt 36 gebildeten Teile des Tragelements 3 bestehen aus einem flexiblen Material, beispielsweise einer Plane oder einem Gewebe dergleichen, wie weiter oben schon erwähnt.

An der freien Kante 32.1' ist der erste Wandbereich 32.1 des Tragelements 3 über den Oberrand 24 des Sammelwagens 2 um 180° nach außen und unten umgelenkt und in einer Sammelstellung des Sammelwagens 2 fixiert. Zur Verstärkung ist die freie Kante 32.1' mit einem stab- oder rohrförmigem Profilabschnitt 34 versehen.

An der gegenüberliegenden freien Kante 32.2' des teilweise durch den starren Wandbereichsabschnitt 36 gebildeten zweiten Wandbereichs 32.2 ist der starre Wandbereichsabschnitt 36 entlang seiner Oberkante um eine parallel zum dortigen Oberrand 24 des Sammelwagens 2 verlaufende Schwenkachse schwenkbeweglich mit dem Sammelwagen 2 verbunden.

Unterhalb des Tragelements 3 besitzt der Sammelwagen 2 einen durch parallel verlaufenden Streben gebildeten Boden 21 mit einer unterseitigen Räderanordnung 26, mittels welcher der Sammelwagen 2 von einer Bedienungsperson verschoben werden kann, üblicherweise zwischen einer Sammelstelle für zu pressendes Pressgut und der Presse zum Pressen des Pressguts zu Pressballen.

Ganz links in Figur 14 ist eine Ballenpresse 5 üblicher Bauart schematisch dargestellt, die hier nicht näher beschrieben werden. Der Presse 5 vorgeschaltet ist eine Pressgutzufördervorrichtung 4, mit deren Hilfe zu pressendes Pressgut aus dem Sammelwagen 2 entnehmbar und einer Presskammer im Inneren der Presse 5 zuführbar ist.

Die Pressgutzufördervorrichtung 4 weist mehrere parallel zueinander mit horizontalen Achsen verlaufende, drehantreibbare Zuführwalzen 41 auf, die mit radial vorragenden Zähnen ausgebildet sind und die in einer Höhe angeordnet sind, die ein Einfahren des Sammelwagens 2 unter die Anordnung der Zuführwalzen 41 erlaubt.

Weiterhin umfasst hier die Pressgutzufördervorrichtung 4 eine Zugeinrichtung 7, mit deren Hilfe das Tragelement 3 des Sammelwagens 2 in dessen an die Pressgutzufördervorrichtung 4 angekoppelten Zustand zum Anheben von im Sammelraum 20 des Sammelwagens 2 gesammeltem Pressgut entsprechend bewegbar und verstellbar ist. Dazu besitzt die Zugeinrichtung 7 einen aus vertikalen und horizontalen Streben zusammengesetzten Rahmen 70 sowie seitlich zwei parallel zueinander in vertikaler Richtung verlaufende Antriebselemente 71, 71', wie Riemen oder Ketten, die auf zwei parallel zueinander oben und etwa mittig am Rahmen 70 verlaufenden horizontalen Wellen 72, 72' geführt sind. Mit den Antriebselementen 71, 71' ist eine Umlenkrolle 73 verbunden, die in horizontaler Richtung parallel zu den Wellen 72, 72' verläuft. In Höhe der unteren Welle 72 sind an dem Rahmen 2 Haltemittel 74 angeordnet, mit denen die freie Kante 32.1' des ersten Wandbereichs 32.1 des Tragelements 3 in einen lösbaren Halteeingriff bringbar ist.

Mittels eines am Rahmen 70 angeordneten Motors 75 sind die Antriebselemente 71, 71' in Bewegung versetzbar. Hierdurch kann die damit verbundene Umlenkrolle 73 wahlweise nach oben und nach unten verfahren werden.

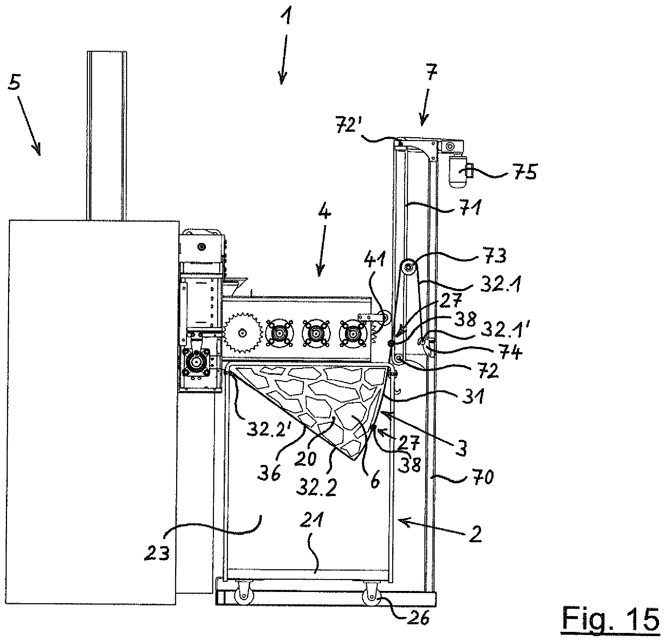

Figur 15 zeigt die Einrichtung 1 aus Figur 14 mit nun angedocktem, bereits teilweise von zu pressendem Pressgut 6 entleerten Sammelwagen 2, in Seitenansicht. Das Andocken des Sammelwagens 2 erfolgt in der Regel in dessen vollständig beladenem Zustand, in welchem die freie Kante 32.1' des ersten Wandbereichs 32.1 die in Figur 14 dargestellte Lage einnimmt. Nach dem Andocken des Sammelwagens 2 an die Pressgutzufördervorrichtung 4 wird von einer Bedienungsperson die freie Kante 32.1' des ersten Wandbereichs 32.1 vom Sammelwagen 2 gelöst, über die sich in ihrer untersten Stellung befindende Umlenkrolle 73 geführt und mit den Haltemitteln 74 der Zugeinrichtung 7 in Halteeingriff gebracht. Durch Einschalten des Motors 75 wird die Umlenkrolle 73 mittels der Antriebselemente 71, 71' nach und nach nach oben bewegt, wodurch das Tragelement 3 insgesamt und damit auch das darin befindliche, zu pressendes Pressgut 6 nach und nach angehoben wird. Gleichzeitig sind die Zuführwalzen 41 der Pressgutzufördervorrichtung 4 in Drehung versetzt und fördern von oben her das Pressgut 6 aus dem Sammelraum 20 ab und in das Innere der Presse 5.

Während des Anhebens des ersten Wandbereichs 32.1 des Tragelements 3 mittels der Umlenkrolle 73 wird der starre Wandbereichsabschnitt 36 des zweiten Wandbereichs 32.2 um die freie Kante 32.2' des zweiten Wandbereichs 32.2 verschwenkt. Dazu ist der starre Wandbereichsabschnitt 36 an seiner Oberkante beispielsweise mittels Scharnieren am oberen, der Presse 5 zugewandten Rand des Sammelwagens 2 verschwenkbar gehaltert.

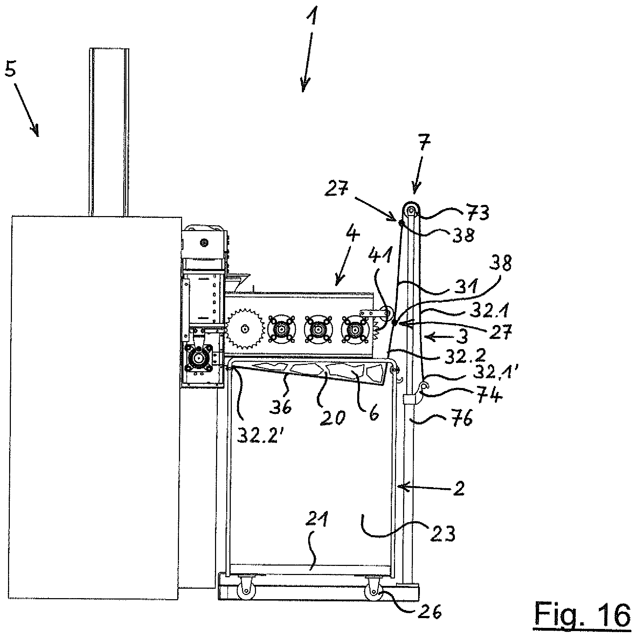

Figur 16 zeigt die Einrichtung 1 aus den Figuren 14 und 15, nun mit annähernd vollständig entleertem Sammelwagen 2 und mit einer geänderten Ausführung der Zugeinrichtung 7, in Seitenansicht.

Die Zugeinrichtung 7 besteht im Beispiel nach Figur 16 aus zwei parallel zueinander angeordneten, vertikal verlaufenden Kolben-Zylinder-Einheiten 76, die senkrecht zur Zeichnungsebene der Figur 16 gesehen einem solchen Abstand voneinander aufweisen, dass der Sammelwagen 2 zwischen ihnen hindurch geführt werden kann. Am oberen Ende der Zylinder der beiden Kolben-Zylinder-Einheiten 76 ist jeweils ein Haltemittel 74 angebracht, mit welchen die freie Kante 32.1' des Wandbereichs 32.1 in lösbaren Halteeingriff bringbar ist.

Aus den Zylindern sind deren Kolbenstangen nach oben hin ausschiebbar. Am oberen Ende der Kolbenstangen der beiden Kolben-Zylinder-Einheiten 76 ist die Umlenkrolle 73 gelagert, die in Figur 16 annähernd ihre oberste Stellung erreicht hat. In dieser Stellung von Umlenkrolle 73 und darüber geführtem Tragelement 3 hat der starre Wandbereichsabschnitt 36 annähernd eine horizontale Lage erreicht, der den Querschnitt des Sammelraums 20 des Sammelwagens 2 im Wesentlichen überdeckt. Durch weiteres Anheben des Tragelement 3 bis zum Erreichen einer horizontalen Lage des starren Wandbereichsabschnitts 36 können die Zuführwalzen 41 das Pressgut 6 vollständig aus dem Sammelraum 20 entnehmen und der Presse 5 zu führen, ohne dass in unerwünschter Weise Pressgut 6 im Sammelwagen 2 zurückbleibt.

Sowohl in Figur 15 als auch in Figur 16 ist eine gegenüber der oben anhand von Figur 4 beschriebenen Rückstellvorrichtung 27 geänderte Rückstellvorrichtung 27 dargestellt. Bei der Rückstellvorrichtung 27 nach den Figuren 15 und 16 ist vorgesehen, dass in oder an den Bereichen des Tragelements 3, die in dessen Grundstellung unteren Ecken des Sammelraums 20 am nächsten liegen, ein Rückführen des Tragelements 3 in seine Grundstellung beim Absenken des Tragelements 3 aus einer angehobenen Stellung bewirkende oder unterstützende Beschwerungsgewichte 38 als Rückstellvorrichtung 27 eingearbeitet oder angebracht sind.

Die Beschwerungsgewichte 38 sind hier metallische, stabförmige, horizontal verlaufende Profile, die die Bewegungen des Tragelements 3 nicht behindern, aber dessen Rückführung in leerem Zustand in seine gewünschte, U-förmige Grundstellung bewirken. Zweckmäßig sind dabei im flexiblen Teil des Tragelements 3 die Beschwerungsgewichte 38 eingefasst oder befestigt, wobei die Beschwerungsgewichte 38 dort angeordnet sind, wo das Tragelement 3 in seiner Grundstellung jeweils einen Übergang vom Bodenbereich 31 zu den Wandbereichen 32.1, 32.2 aufweist. Durch die Beschwerungsgewichte 38 werden die vertikalen Teile des Tragelements 3, also dessen Wandbereiche 32.1, 32.2, straff gezogen und der Bodenbereich 31 des Tragelements 3, der sich zwischen den vertikal hängenden Wandbereichen 32.1, 32.2 erstreckt, wird, vorausgesetzt dass er nicht länger als der Querschnitt des Sammelraums 20 ist, ebenfalls glattgezogen.

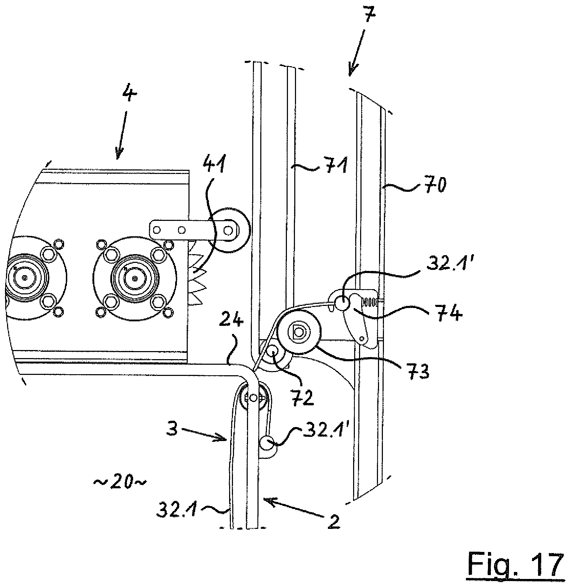

Figur 17 zeigt ein Detail aus der Figur 15 in vergrößerter Darstellung, mit dem das Verbinden der freien Kante 32.1' des ersten Wandbereichs 32.1 des Tragelements 3 mit dem Haltemittel 74 der Zugeinrichtung 7 veranschaulicht wird. Während des Andockens des Sammelwagens 2 an die Pressgutzufördervorrichtung 4 ist die freie Kante 32.1' noch an dem Sammelwagen 2 festgelegt. Nach dem Andocken wird durch eine Bedienungsperson die freie Kante 32.1' des ersten Wandbereichs 32.1 des Tragelements 3 vom Sammelwagen 2 gelöst, über die sich in ihrer tiefsten Position befindende Umlenkrolle 73 geführt und dann mit den ortsfesten Haltemitteln 74 der Zugeinrichtung 7 in lösbaren Halteeingriff gebracht. Anschließend kann durch Verfahren der Umlenkrolle 73 nach oben das Tragelement 3 nach und nach angehoben werden, um im Sammelraum 20 des Sammelwagens 2 gesammeltes Pressgut den Zuführwalzen 41 der Pressgutzufördervorrichtung 4 zuzuführen.

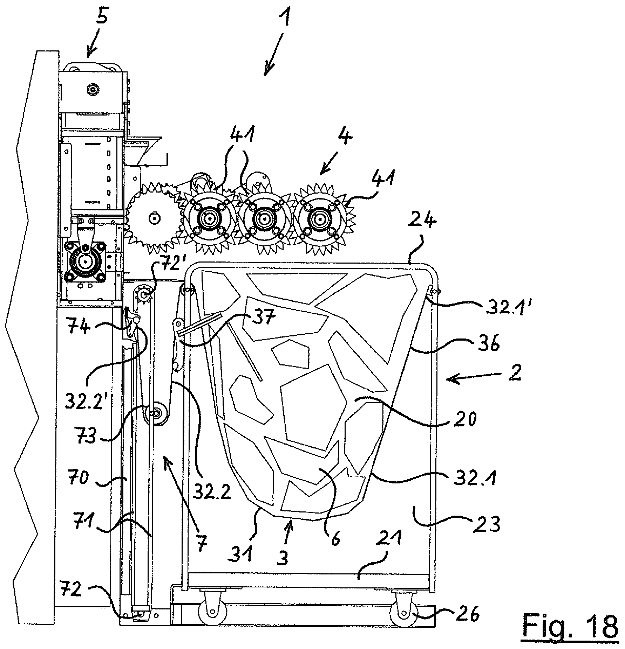

Figur 18 zeigt die Einrichtung 1 in einer weiteren Ausführung, im an eine Presse 5 angebauten Zustand und mit einem angedockten, bereits zu einem kleinen Teil von zu pressendem Pressgut 6 entleerten Sammelwagen 2, in einer Seitenansicht.

Der Sammelwagen 2 besitzt auch hier einen Boden 21 mit einer unterseitigen Räderanordnung 26, um ihn durch eine Bedienungsperson verfahren zu können. Weiter ist auch hier im Sammelwagen 2 ein Tragelement 3 angeordnet, welches einen ersten Wandbereich 32.1, einen Bodenbereich 31 und einen zweiten Wandbereich 32.2 aufweist. In Hintergrund liegt am Sammelwagen 2 dessen feste Seitenwand 23. Eine vordere, in der Realität ebenfalls vorhandene feste Seitenwand ist in Figur 18 aus Gründen der Sichtbarkeit des Tragelements 3 weggelassen.

Bei dem Beispiel nach Figur 18 ist ein oberer Teil des ersten Wandbereichs 32.1 des Tragelements 3 als starrer Wandbereichsabschnitt 36 ausgebildet, dessen oberer Rand die Kante 32.1' des ersten Wandbereichs 32.1 bildet. Entlang dieser Kante 32.1' ist der Wandbereichsabschnitt 36 schwenkgelenkig mit dem Oberrand 24 des Sammelwagens 2 verbunden. Der übrige Teil des Tragelements 3 besteht aus einem flexiblen Material, wie einer Plane oder einer Gewebebahn oder dergleichen.

Auch bei dem Beispiel nach Figur 18 ist eine Zugeinrichtung 7 vorhanden, die hier zwischen dem Sammelwagen 2 und der diesem zugewandten Seite der Presse 5 angeordnet ist. Die Zugeinrichtung 7 besitzt auch hier einen vertikalen Rahmen 70 mit zwei umlaufenden Antriebselementen 71, 71', wie Ketten oder Riemen, die über zwei horizontale und zueinander parallele, in einem vertikalen Abstand voneinander angeordnete Wellen 72, 72' geführt und antreibbar sind.

An den Antriebselementen 71, 71' ist auch hier eine horizontal verlaufende Umlenkrolle 73 gehaltert, die mittels Bewegens der Antriebselemente 71, 71' in Vertikalrichtung bewegbar ist.

In einem oberen Bereich des Rahmens 70 liegen ortsfest zwei Haltemittel 74 in horizontalen Abstand voneinander, mit denen in Figur 18 die freie Kante 32.2' des zweiten Wandbereichs 32.2 des Tragelements 3 in lösbaren Eingriff gebracht ist. Zur Herstellung dieses Eingriffs ist am Sammelwagen 2 ein Schwenkbügel 37 angeordnet, durch dessen manuelles Verschwenken eine Bedienungsperson die freie Kante 32.2' des Wandbereichs 32.2 in den Halteeingriff mit den Haltemitteln 74 bringen kann.

Durch Bewegen der Umlenkrolle 73 nach unten wird der flexible, über den Oberrand 24 des Sammelwagens 2 um 180° nach außen und unten umgelenkte Teil des Tragelement 3 nach unten hin gezogen, wodurch das zu pressende Pressgut 6 im Sammelraum 20 des Sammelwagens 2 nach und nach angehoben und so den Zuführwalzen 41 der Pressgutzufördervorrichtung 4 zugeführt wird.

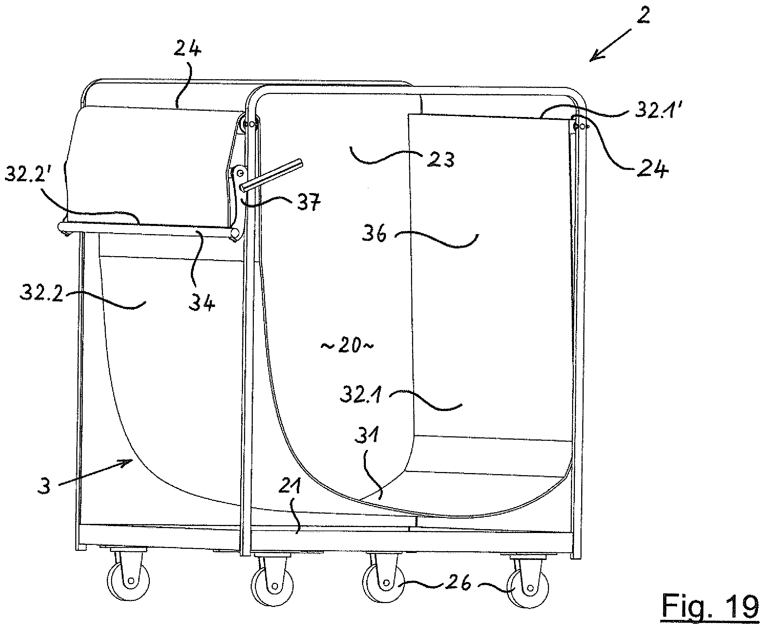

Figur 19 zeigt den Sammelwagen 2 aus Figur 18 als Einzelteil in Ansicht. Unten in Figur 19 ist der Boden 21 des Sammelwagens 2 mit der unterseitigen Räderanordnung 26 sichtbar. Vom Boden 21 erstrecken sich Streben nach oben, die oberseitig den Oberrand 24 des Sammelwagens 2 bilden. Im Hintergrund liegt die eine feste Seitenwand 23 des Sammelwagens 2. Eine gegenüberliegende weitere feste Seitenwand ist in Figur 19 aus Übersichtlichkeitsgründen weggelassen.

Im Sammelwagen 2 ist das Tragelement 3 mit den Wandbereichen 32.1, 32,2 und dem Bodenbereich 31 angeordnet. Der überwiegende Teil des in Figur 19 rechts liegenden ersten Wandbereichs 32.1 ist durch den starren Wandbereichsabschnitt 36 gebildet, der entlang der freien, oberen Kante 32.1' gelenkig mit dem Oberrand 24 des Sammelwagens 2 verbunden ist.

An der gegenüberliegenden, in Figur 19 linken Seite des Sammelwagens 2 ist der zweite Wandbereich 32.2 über den Oberrand 24 des Sammelwagens 2 um 180° nach unten hin umgelenkt und an seiner freien Kante 32.2' mit dem Schwenkbügel 37 in lösbaren Halteeingriff gebracht. In diesem Zustand des Sammelwagens 2 kann dieser mit zu pressendem Pressgut befüllt werden, welches im Sammelraum 20 des Sammelwagens 2 aufgenommen wird.

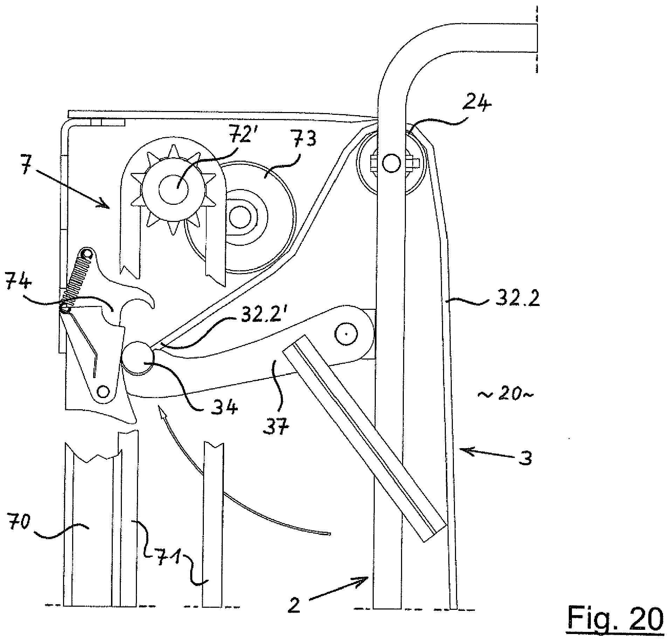

Figur 20 zeigt ein Detail aus der Figur 18 in vergrößerter Darstellung. Rechts in Figur 20 ist ein kleiner Teil des Sammelwagens 2 mit einem Teil des zweiten Wandbereichs 32.2 des Tragelements 3 erkennbar, welcher über den hier zur Reibungsverminderung mit einer Rolle ausgeführten Oberrand 24 des Sammelwagens 2 umgelenkt ist. Die freie Kante 32,2' des zweiten Wandbereichs 32.2 befindet sich noch in Eingriff mit dem Schwenkbügel 37, der aus der in Figur 19 gezeigten Grundstellung bereits in Richtung zu den Haltemitteln 74 der Zugeinrichtung 7 verschwenkt ist. Am Ende der durch den Pfeil in Figur 19 angedeuteten Schwenkbewegung übergibt der Schwenkbügel 37 die mit einem stab- oder rohrförmigen Profilabschnitt 34 verstärkte freie Kante 32.2' des zweiten Wandbereichs 32.2 an die Haltemittel 74, die mittels eines federbelasteten Rastmechanismus den Profilabschnitt 34 lösbar in Halteeingriff nehmen.

Oberhalb des Schwenkbügels 37 ist die Umlenkrolle 73 sichtbar, die sich hier in ihrer obersten Stellung befindet. Mittels der Zugeinrichtung 7 kann danach die Umlenkrolle 73 nach unten bewegt werden, wodurch das anhand von Figur 18 beschriebene Anheben des Tragelement 3 mit dem darin befindlichen zu pressenden Pressgut erfolgt.

Charakteristisch für alle beschriebenen Ausführungen der Einrichtung 1 zum Sammeln von Pressgut und zum Zufördern des gesammelten Pressguts zu einer das Pressgut pressenden Presse ist, dass das Tragelement 3 neben seiner Tragfunktion während des Sammelns von Pressgut 6 im Sammelwagen 2 bei dessen Entleeren an der Pressgutzufördervorrichtung 4 vorteilhaft zusätzlich die Funktion eines Förderelements übernimmt.

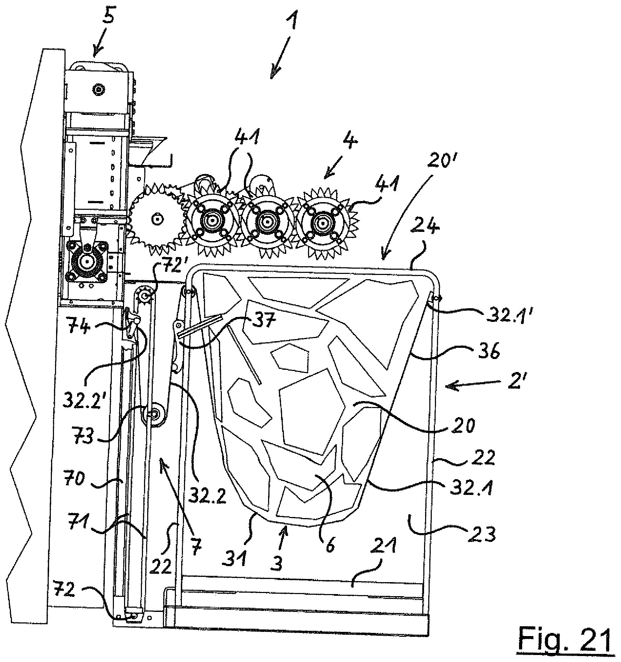

Figur 21 zeigt die Einrichtung 1 in einer weiteren Ausführung, im an eine Presse 5 angebauten Zustand und mit einem stationär angebauten, bereits zu einem kleinen Teil von zu pressendem Pressgut 6 entleerten Sammelbehälter 2', in einer Seitenansicht. Charakteristisch für diese Ausführung der Einrichtung 1 ist, dass sie anstelle des verfahrbaren, an die Pressgutzufördervorrichtung 4 andockbaren und von dieser trennbaren Sammelwagens einen stationär angebauten Sammelbehälter 2' aufweist. Abgesehen von der Verfahrbarkeit weist der Sammelbehälter 2' alle Merkmale des weiter oben im Zusammenhang mit der erfindungsgemäßen Einheit 1 beschriebenen Sammelwagens 2 auf, insbesondere das zum Zweck des Anhebens des im Sammelraum 20 befindlichen zu pressenden Pressguts 6 bewegbare Tragelement 3.

Zum manuellen oder maschinellen Einbringen von zu pressendem Pressgut in den Sammelraum 20 des Sammelbehälters 2' dient der in Figur 21 rechts oben am Sammelbehälter 2' liegende, nach oben offene, freie Einwurfbereich 20'.

Zur bedarfsweisen Vergrößerung des Einwurfbereichs 20' kann zusätzlich vorgesehen sein, dass die Anordnung der Zuführwalzen 41 nach oben und links hin verschwenkbar ist.

Das Tragelement 3 des Sammelbehälters 2' und die Mittel zum Anheben und Absenken des Tragelements 3 des Sammelbehälters 2' können entsprechend den zuvor beschriebenen verschiedenen Ausführungen des Tragelements 3 des Sammelwagens 2 und der Mittel zum Anheben und Absenken des Tragelements 3 des Sammelwagens 2 ausgeführt sein, sodass bezüglich der weiteren in Figur 21 dargestellten Teile auf die vorhergehende Beschreibung, insbesondere der Figur 18, verwiesen wird.

**Bezugszeichenliste:**

| Zeichen | Bezeichnung |
|---|---|
| 1 | Einrichtung |
| | |
| 2 | Sammelwagen |
| 2' | Sammelbehälter |
| 20 | Sammelraum |
| 20' | Einwurfbereich |
| 21 | Boden |
| 22 | erste Seitenwände |
| 23 | zweite Seitenwände |
| 23' | Innenauskleidung an 23 |
| 24 | Oberränder von 22, 23 |
| 25 | Wellenaufnahmen für 35 |
| 26 | Räderanordnung |
| 27 | Rückstellvorrichtung |
| 28 | Spannfederanordnung |
| 28' | Zugmittel in 28 |
| 29 | Verbindungselemente für 23' |
| | |
| 3 | Tragelement |
| 31 | Bodenbereich |
| 32.1 | erster Wandbereich |
| 32.1' | freie Kante von 32.1 |
| 32.2 | zweiter Wandbereich |
| 32.2' | freie Kante von 32.2 |
| 33.1 | dritter Wandbereich |
| 33.1" | freie Kante von 33.1 |
| 33.2 | vierter Wandbereich |
| 34 | Profilabschnitte an 32.1', 32.2', 33.1', 33.2' |
| 35 | Wickelwellen |
| 36 | starrer Wandbereichsabschnitt |
| 37 | Schwenkbügel |
| 38 | Beschwerungsgewichte |
| | |
| 4 | Pressgutzufördervorrichtung |
| 40 | Andockelemente |
| 41 | Zuführwalzen |
| 42 | Befüllrotor |
| 43 | Antriebselemente für 35 |
| 44 | Hubarmanordnung |
| 45 | Hebearmanordnung |
| 46 | Antrieb für 44 |
| 46' | Antrieb für 45 |
| 47 | Anlegeelement |
| | |
| 5 | Presse |
| 50 | Pressraum |
| 51 | Pressgutvorratsraum |
| 52 | Förderpendel in 51 |
| | |
| 6 | Pressgut |
| | |
| 7 | Zugeinrichtung |
| 70 | Rahmen |
| 71, 71' | Antriebselemente |
| 72, 72' | Wellen |
| 73 | Umlenkrolle |
| 74 | Haltemittel |
| 75 | Motor |
| 76 | Kolben-Zylinder-Einheiten |

## Patentansprüche

1. Einrichtung (1) zum Sammeln von Pressgut (6) und zum Zufördern des gesammelten Pressguts (6) zu einer das Pressgut (6) pressenden Presse (5), mit wenigstens einem verfahrbaren Sammelwagen (2), der einen Sammelraum (20) für zu pressendes Pressgut (6) aufweist, und mit einer Pressgutzufördervorrichtung (4), an welche der Sammelwagen (2) andockbar ist, wobei der Sammelwagen (2) einen Boden (21) und eine unterseitigen Räderanordnung (26) sowie wenigstens zwei einander gegenüberliegende Seitenwände (22, 23) aufweist und wobei unter Anheben nach oben das zu pressende Pressgut (6) mittels der Pressgutzufördervorrichtung (4) aus dem Sammelwagen (2) entnehmbar und einem Pressraum (50) oder Pressgutvorratsraum (51) der Presse (5) zuförderbar ist,
**dadurch gekennzeichnet,**
- **dass** an oder in dem Sammelwagen (2) ein bahnförmiges, flexibles oder gelenkiges Tragelement (3) mit einem Bodenbereich (31) und mit wenigstens zwei einander gegenüberliegenden Wandbereichen (32.1, 32.2) mit mindestens je einer oberen, freien Kante (32.1', 32.2') angeordnet ist,
- **dass** das Tragelement (3) in einer Grundstellung U-förmig parallel oder annähernd parallel zu wenigstens zwei einander gegenüberliegenden Seitenwänden (22) und zu dem Boden (21) des Sammelwagens (2) verlaufend an diesen anliegt oder wenigstens zwei einander gegenüberliegende Seitenwände (22) und den Boden (21) des Sammelwagens (2) bildet und
- **dass** im an die Pressgutzufördervorrichtung (4) angedockten Zustand des Sammelwagens (2) zum Zweck des Anhebens des im Sammelwagen (2) befindlichen, zu pressenden Pressguts (6) das Tragelement (3) von der freien Kante (32.1', 32.2') zumindest eines seiner Wandbereiche (32.1, 32.2) aus verkürzbar oder anhebbar ist.

2. Einrichtung nach Anspruch 1, **dadurch gekennzeichnet, dass** an der freien Kante (32.1', 32.2') eines der Wandbereiche (32.1, 32.2) des Tragelements (3) eine Wickelwelle (35) angeordnet ist, die im an die Pressgutzufördervorrichtung (4) angedockten Zustand des Sammelwagens (2) in eine das Tragelement (3) aufwickelnde Drehung versetzbar ist.

3. Einrichtung nach Anspruch 1, **dadurch gekennzeichnet, dass** an der freien Kante (32.1', 32.2') zweier einander gegenüberliegender Wandbereiche (32.1, 32.2) des bahnförmigen Tragelements (3) je eine Wickelwelle (35) angeordnet ist, die im an die Pressgutzufördervorrichtung (4) angedockten Zustand des Sammelwagens (2) in eine das Tragelement (3) aufwickelnde synchrone oder annähernd synchrone Drehung versetzbar sind.

4. Einrichtung nach Anspruch 2 oder 3, **dadurch gekennzeichnet, dass** an der Pressgutzufördervorrichtung (4) ein oder mehrere drehantreibbare Antriebselemente (43) angeordnet sind, die im an die Pressgutzufördervorrichtung (4) angedockten Zustand des Sammelwagens (2) mit dessen Wickelwelle (35) oder Wickelwellen (35) in Drehantriebseingriff stehen oder bringbar sind.

5. Einrichtung nach Anspruch 1, **dadurch gekennzeichnet, dass** ein fester Oberrand (24) des Sammelwagens (2) als Umlenkelement ausgebildet ist, über welches der eine Wandbereich (32.1, 32.2) des Tragelements (3) um 180° nach außen und unten umgelenkt ist, wobei im an die Pressgutzufördervorrichtung (4) angedockten Zustand des Sammelwagens (2) die freien Kante (32.1', 32.2') des umgelenkten Wandbereichs (32.1, 32.2) des Tragelements (3) aus dessen Grundstellung in eine Bewegung nach unten versetzbar ist.

6. Einrichtung nach Anspruch 1, **dadurch gekennzeichnet, dass** zwei einander gegenüberliegende feste Oberränder (24) des Sammelwagens (2) jeweils als Umlenkelement ausgebildet sind, über welche zwei einander gegenüberliegende Wandbereiche (32.1, 32.2) des Tragelements (3) jeweils um 180° nach außen und unten umgelenkt sind, wobei im an die Pressgutzufördervorrichtung (4) angedockten Zustand des Sammelwagens (2) die freien Kanten (32.1', 32.2') der umgelenkten Wandbereiche (32.1, 32.2) des Tragelements (3) aus dessen Grundstellung jeweils in eine synchrone oder annähernd synchrone Bewegung nach unten versetzbar sind.

7. Einrichtung nach Anspruch 1, **dadurch gekennzeichnet, dass** das Tragelement (3) neben seinem Bodenbereich (31) vier mit dem Bodenbereich (31) verbundene oder einstückige, untereinander nicht unmittelbar verbundene Wandbereiche (32.1, 32.2, 33.1, 33.2) mit je einer freien Kante (32.1', 32.2', 33.1', 33.2') aufweist und dass vier feste Oberränder (24) des Sammelwagens (2) jeweils als Umlenkelement ausgebildet sind, über welche die Wandbereiche (32.1, 32.2, 33.1, 33.2) des Tragelements (3) jeweils um 180° nach außen und unten umgelenkt sind, wobei im an die Pressgutzufördervorrichtung (4) angedockten Zustand des Sammelwagens (2) die freien Kanten (32.1', 32.2', 33.1', 33.2') der umgelenkten Wandbereiche (32.1, 32.2, 33.1, 33.2) des Tragelements (3) aus dessen Grundstellung jeweils in eine synchrone oder annähernd synchrone Bewegung nach unten versetzbar sind.

8. Einrichtung nach Anspruch 5, 6 oder 7, **dadurch gekennzeichnet, dass** an der Pressgutzufördervorrichtung (4) eine vertikal verfahrbare Hubarmanordnung (44) angeordnet ist, wobei die Hubarmanordnung (44) im an die Pressgutzufördervorrichtung (4) angedockten Zustand des Sammelwagens (2) mit der freien Kante (32.1', 32.2') des umgelenkten Wandbereichs (32.1, 32.2) oder mit den freien Kanten (32.1', 32.2', 33.1', 33.2') der umgelenkten Wandbereiche (32.1, 32.2, 33.1, 33.2) des Tragelements (3) in Bewegungseingriff steht oder bringbar ist.

9. Einrichtung nach Anspruch 1, **dadurch gekennzeichnet, dass** das Tragelement (3) an der freien Kante (32.1') eines ersten Wandbereichs (32.1) verschwenkbar an einem Oberrand (24) des Sammelwagens (2) angelenkt ist, dass ausgehend von der freien Kante (32.1') dieses ersten Wandbereichs (32.1) ein Wandbereichsabschnitt (36), dessen Fläche im Wesentlichen oder annähernd der Querschnittsfläche des Sammelraums (20) des Sammelwagens (2) entspricht, als starre Fläche ausgebildet ist und dass das Tragelement (3) von der freien Kante (32.2') eines dem ersten Wandbereich (32.1) gegenüberliegenden zweiten Wandbereichs (32.2) aus verkürzbar oder anhebbar ist.

10. Einrichtung nach Anspruch 9, **dadurch gekennzeichnet, dass** die freie Kante (32,2') des zweiten Wandbereichs (32.2) des Tragelements (3) lösbar mit dem zugehörigen Oberrand (24) des Sammelwagens (2) verbunden ist, dass an der Pressgutzufördervorrichtung (4) eine Zugeinrichtung (7) oder eine Wickeleinrichtung angeordnet ist, die im an die Pressgutzufördervorrichtung (4) angedockten Zustand des Sammelwagens (2) mit der freien Kante (32.2') des zweiten Wandbereichs (32.2) des Tragelements (3) in Eingriff bringbar ist und mit der das Tragelement (3) nach oben hin oder unter Umlenkung über den Oberrand (24) des Sammelwagens (2) nach unten hin ziehbar oder aufwickelbar ist.

11. Einrichtung nach Anspruch 10, **dadurch gekennzeichnet, dass** die Zugeinrichtung (7) flaschenzugartig mit einer horizontalen, vertikal verfahrbaren Umlenkrolle (73), über welche das Tragelement (3) geführt ist, ausgebildet ist und Haltemittel (74) zum lösbaren Fixieren der freien Kante (32.2') des zweiten Wandbereichs (32.2) des Tragelements (3) aufweist.

12. Einrichtung nach einem der Ansprüche 9 bis 11, **dadurch gekennzeichnet, dass** in einer Anhebe-Endposition des Tragelements (3) dessen starrer Wandbereichsabschnitt (36) den Querschnitt des Sammelraums (20) des Sammelwagens (2) im Wesentlichen oder annähernd überdeckt und eine horizontale Lage oder eine in Richtung zur Pressgutzufördervorrichtung (4) abwärts oder aufwärts geneigte Lage einnimmt.

13. Einrichtung nach einem der Ansprüche 1 bis 12, **dadurch gekennzeichnet, dass** an dem Sammelwagen (2) eine das Tragelement (3) mit einer in Richtung zu dessen Grundstellung wirkenden Kraft vorbelastende Rückstellvorrichtung (27) angeordnet ist.

14. Einrichtung nach Anspruch 13, **dadurch gekennzeichnet, dass** in oder an den Bereichen des Tragelements (3), die in dessen Grundstellung unteren Ecken des Sammelraums (20) am nächsten liegen, ein Rückführen des Tragelements (3) in seine Grundstellung beim Absenken des Tragelements (3) aus einer angehobenen Stellung bewirkende oder unterstützende Beschwerungsgewichte (38) als Rückstellvorrichtung (27) eingearbeitet oder angebracht sind.

15. Einrichtung nach Anspruch 13, **dadurch gekennzeichnet, dass** die Rückstellvorrichtung (27) eine die vorbelastende Kraft erzeugende Spannfederanordnung (28) aufweist, die unmittelbar oder über flexible Zugmittel (28') an zwei oder mehr Punkten in Übergangsbereichen zwischen den Wandbereichen (32.1, 32.2, 33.1, 33.2) und dem Bodenbereich (31) des Tragelements (3) angreift.

16. Einrichtung nach Anspruch 1, **dadurch gekennzeichnet, dass** das Tragelement (3) zumindest an der freien Kante (32.1', 32.2') eines seiner Wandbereiche (32.1, 32.2) an dem übrigen Sammelwagen (2) lose aufgehängt ist und dass die Pressgutzufördervorrichtung (4) eine Hebearmanordnung (45) aufweist, mit der im an die Pressgutzufördervorrichtung (4) angedockten Zustand des Sammelwagens (2) das Tragelement (3) an seiner lose aufgehängten, von der Pressgutzufördervorrichtung (4) entfernten freien Kante (32.1', 32.2', 33.1', 32.2') erfassbar und mittels Verschwenkens der Hebearmanordnung (45) in Aufwärtsrichtung bis in eine eine zur Pressgutzufördervorrichtung (4) hin abwärts geneigte Pressgutrutschfläche bildende Form nach oben ziehbar ist.

17. Einrichtung nach Anspruch 16, **dadurch gekennzeichnet, dass** die Pressgutzufördervorrichtung (4) ein stangenförmiges Anlegeelement (47) aufweist, welches bei an die Pressgutzufördervorrichtung (4) angedocktem Sammelwagen (2) über dessen Oberseite verläuft und an welches das Tragelement (3) bei seinem Hochziehen unter Abwinklung anlegbar ist.

18. Einrichtung nach einem der Ansprüche 1 bis 17, **dadurch gekennzeichnet, dass** an dem Sammelwagen (2) zumindest dessen Seitenwände (23), denen kein Wandbereich (32.1, 32.2, 33.1, 33.2) des Tragelements (3) zugeordnet ist, innenseitig glattflächig, insbesondere als Kunststoff- oder Blechplatte, ausgebildet oder mit einer glattflächigen Innenauskleidung (23'), insbesondere Kunststoff- oder Blechplatte, versehen sind.

19. Einrichtung nach einem der Ansprüche 1 bis 18, **dadurch gekennzeichnet, dass** das Tragelement (3) durch ein Tuch oder ein Gewebe oder eine Plane oder eine Folie oder ein engmaschiges Netz oder durch eine Anordnung von rollladenartig gelenkig miteinander verbundenen Profilabschnitten gebildet ist.

20. Einrichtung nach Anspruch 1 oder nach einem der Ansprüche 5 bis19, **dadurch gekennzeichnet, dass** die freie Kante (32.1', 32.2', 33.1', 33.2') eines Wandbereichs (32.1, 32.2, 33.1, 33.2) oder mehrerer Wandbereiche (32.1, 32.2, 33.1, 33.2) oder aller Wandbereiche (32.1, 32.2, 33.1, 33.2) des Tragelements (3) durch je einen mit dem Tragelement (3) verbundenen stab-oder rohrförmigen Profilabschnitt (34) gebildet oder verstärkt ist.

21. Einrichtung (1) zum Sammeln von Pressgut (6) und zum Zufördern des gesammelten Pressguts (6) zu einer das Pressgut (6) pressenden Presse (5), mit einem Sammelbehälter (2'), der einen Sammelraum (20) für zu pressendes Pressgut (6) aufweist, und mit einer Pressgutzufördervorrichtung (4), an welche der Sammelbehälter (2') stationär angebaut ist, wobei der Sammelbehälter (2') einen Boden (21) sowie wenigstens zwei einander gegenüberliegende Seitenwände (22, 23) aufweist und wobei unter Anheben nach oben das zu pressende Pressgut (6) mittels der Pressgutzufördervorrichtung (4) aus dem Sammelbehälter (2') entnehmbar und einem Pressraum (50) oder Pressgutvorratsraum (51) der Presse (5) zuförderbar ist,
**dadurch gekennzeichnet,**
- **dass** an oder in dem Sammelbehälter (2') ein bahnförmiges, flexibles oder gelenkiges Tragelement (3) mit einem Bodenbereich (31) und mit wenigstens zwei einander gegenüberliegenden Wandbereichen (32.1, 32.2) mit mindestens je einer oberen, freien Kante (32.1', 32.2') angeordnet ist,
- **dass** das Tragelement (3) in einer Grundstellung U-förmig parallel oder annähernd parallel zu wenigstens zwei einander gegenüberliegenden Seitenwänden (22) und zu dem Boden (21) des Sammelbehälters (2') verlaufend an diesen anliegt oder wenigstens zwei einander gegenüberliegende Seitenwände (22) und den Boden (21) des Sammelbehälters (2') bildet und
- **dass** zum Zweck des Anhebens des im Sammelbehälter (2') befindlichen, zu pressenden Pressguts (6) das Tragelement (3) von der freien Kante (32.1', 32.2') zumindest eines seiner Wandbereiche (32.1, 32.2) aus verkürzbar oder anhebbar ist.

22. Einrichtung nach Anspruch 21, **dadurch gekennzeichnet, dass** sie die Merkmale eines oder mehrerer der Ansprüche 2 bis 20 aufweist und dass dabei der an die Pressgutzufördervorrichtung (4) andockbare verfahrbare Sammelwagen (2) durch den an die Pressgutzufördervorrichtung (4) stationär angebauten Sammelbehälter (2') ersetzt ist.

23. Verfahrbarer Sammelwagen (2) zur Verwendung in der Einrichtung (1) nach einem der Ansprüche 1 bis 20, wobei der Sammelwagen (2) einen Sammelraum (20) für zu pressendes Pressgut (6) aufweist und an eine Pressgutzufördervorrichtung (4) einer Presse (5) andockbar ist, wobei der Sammelwagen (2) einen Boden (21) und eine unterseitigen Räderanordnung (26) sowie wenigstens zwei einander gegenüberliegende Seitenwände (22, 23) aufweist und wobei unter Anheben nach oben das zu pressende Pressgut (6) mittels der Pressgutzufördervorrichtung (4) aus dem Sammelwagen (2) entnehmbar und einem Pressraum (50) oder Pressgutvorratsraum (51) der Presse (5) zuförderbar ist,
**dadurch gekennzeichnet,**
- **dass** an oder in dem Sammelwagen (2) ein bahnförmiges, flexibles oder gelenkiges Tragelement (3) mit einem Bodenbereich (31) und mit wenigstens zwei einander gegenüberliegenden Wandbereichen (32.1, 32.2) mit wenigstens je einer oberen, freien Kante (32.1', 32.2') angeordnet ist,
- **dass** das Tragelement (3) in einer Grundstellung U-förmig parallel oder annähernd parallel zu wenigstens zwei einander gegenüberliegenden Seitenwänden (22) und zu dem Boden (21) des Sammelwagens (2) verlaufend an diesen anliegt oder wenigstens zwei einander gegenüberliegende Seitenwände (22) und den Boden (21) des Sammelwagens (2) bildet und
- **dass** zum Zweck des Anhebens des im Sammelwagen (2) befindlichen, zu pressenden Pressguts (6) das Tragelement (3) von der freien Kante (32.1', 32.2', 33.1', 33.2') zumindest eines seiner Wandbereiche (32.1, 32.2, 33.1, 33.2) aus verkürzbar oder anhebbar ist.

24. Sammelwagen nach Anspruch 23, **dadurch gekennzeichnet, dass** an der freien Kante (32.1', 32.2') eines der Wandbereiche (32.1, 32.2) des Tragelements (3) eine Wickelwelle (35) angeordnet ist, die in eine das Tragelement (2) aufwickelnde Drehung versetzbar ist.

25. Sammelwagen nach Anspruch 23, **dadurch gekennzeichnet, dass** an der freien Kante (32.1', 32.2') zweier einander gegenüberliegender Wandbereiche (32.1, 32.2) des bahnförmigen Tragelements (3) je eine Wickelwelle (35) angeordnet ist, die in eine das Tragelement (3) aufwickelnde synchrone oder annähernd synchrone Drehung versetzbar sind.

26. Sammelwagen nach Anspruch 23, **dadurch gekennzeichnet, dass** ein fester Oberrand (24) des Sammelwagens (2) als Umlenkelement ausgebildet ist, über welches der eine Wandbereich (32.1, 32.2) des Tragelements (3) um 180° umgelenkt ist, wobei die freie Kante (32.1', 32.2') des umgelenkten Wandbereichs (32.1, 32.2) des Tragelements (3) aus dessen Grundstellung in eine Bewegung nach unten versetzbar ist.

27. Sammelwagen nach Anspruch 23, **dadurch gekennzeichnet, dass** zwei einander gegenüberliegende feste Oberränder (24) des Sammelwagens (2) jeweils als Umlenkelement ausgebildet sind, über welche zwei einander gegenüberliegende Wandbereiche (32.1, 32.2) des Tragelements (3) jeweils um 180° umgelenkt sind, wobei die freien Kanten (32.1', 32.2') der umgelenkten Wandbereiche (32.1, 32.2) des Tragelements (3) aus dessen Grundstellung jeweils in eine synchrone oder annähernd synchrone Bewegung nach unten versetzbar sind.

28. Sammelwagen nach Anspruch 23, **dadurch gekennzeichnet, dass** das Tragelement (3) neben seinem Bodenbereich (31) vier mit dem Bodenbereich (31) verbundene oder einstückige, untereinander nicht unmittelbar verbundene Wandbereichen (32.1, 32.2, 33.1, 33.2) mit je einer oberen, freien Kante (32.1', 32.2', 33.1', 33.2') aufweist und dass vier feste Oberränder (24) des Sammelwagens (2) jeweils als Umlenkelement ausgebildet sind, über welche die Wandbereiche (32.1, 32.2, 33.1, 33.2) des Tragelements (3) jeweils um 180° umgelenkt sind, wobei die freien Kanten (32.1', 32.2', 33.1', 33.2') der umgelenkten Wandbereiche (32.1, 32.2, 33.1, 33.2) des Tragelements (3) aus dessen Grundstellung jeweils in eine synchrone oder annähernd synchrone Bewegung nach unten versetzbar sind.

29. Sammelwagen nach Anspruch 23, **dadurch gekennzeichnet, dass** das Tragelement (3) an der freien Kante (32.1') eines ersten Wandbereichs (32.1) verschwenkbar an einem Oberrand (24) des Sammelwagens (2) angelenkt ist, dass ausgehend von der freien Kante (32.1') dieses ersten Wandbereichs (32.1) ein Wandbereichsabschnitt (36), dessen Fläche im Wesentlichen oder annähernd der Querschnittsfläche des Sammelraums (20) des Sammelwagens (2) entspricht, als starre Fläche ausgebildet ist und dass das Tragelement (3) von der freien Kante (32.2') eines dem ersten Wandbereich (32.1) gegenüberliegenden zweiten Wandbereichs (32.2) aus verkürzbar oder anhebbar ist.

30. Sammelwagen nach Anspruch 29, **dadurch gekennzeichnet, dass** die freie Kante (32.2') des zweiten Wandbereichs (32.2) des Tragelements (3) lösbar mit dem zugehörigen Oberrand (24) des Sammelwagens (2) verbunden ist und dass mittels einer Zugeinrichtung (7) oder einer Wickeleinrichtung, mit der die freie Kante (32.2') des zweiten Wandbereichs (32.2) des Tragelements (3) in Eingriff bringbar ist, das Tragelement (3) nach oben hin oder unter Umlenkung über den Oberrand (24) des Tragwagens (2) nach unten hin ziehbar oder aufwickelbar ist.

31. Sammelwagen nach Anspruch 29 oder 30, **dadurch gekennzeichnet, dass** in einer Anhebe-Endposition des Tragelements (3) dessen starrer Wandbereichsabschnitt (36) den Querschnitt des Sammelraums (20) des Sammelwagens (2) im Wesentlichen oder annähernd überdeckt und eine im Wesentlichen horizontale Lage oder eine in Entnahmerichtung des zu pressenden Pressguts (6) abwärts oder aufwärts geneigte Lage einnimmt.

32. Sammelwagen nach einem der Ansprüche 23 bis 31, **dadurch gekennzeichnet, dass** an dem Sammelwagen (2) eine das Tragelement (3) mit einer in Richtung zu dessen Grundstellung wirkenden Kraft vorbelastende Rückstellvorrichtung (27) angeordnet ist.

33. Sammelwagen nach Anspruch 32, **dadurch gekennzeichnet, dass** in oder an den Bereichen des Tragelements (3), die in dessen Grundstellung unteren Ecken des Sammelraums (20) am nächsten liegen, ein Rückführen des Tragelements (3) in seine Grundstellung beim Absenken des Tragelements (3) aus einer angehobenen Stellung bewirkende oder unterstützende Beschwerungsgewichte (38) als Rückstellvorrichtung (27) eingearbeitet oder angebracht sind.

34. Sammelwagen nach Anspruch 32, **dadurch gekennzeichnet, dass** die Rückstellvorrichtung (27) eine die vorbelastende Kraft erzeugende Spannfederanordnung (28) aufweist, die unmittelbar oder über flexible Zugmittel (28') an zwei oder mehr Punkten in Übergangsbereichen zwischen den Wandbereichen (32.1, 32.2, 33.1, 33.2) und dem Bodenbereich (31) des Tragelements (3) angreift.

35. Sammelwagen nach einem der Ansprüche 23 bis 34, **dadurch gekennzeichnet, dass** an dem Sammelwagen (2) zumindest dessen Seitenwände (22, 23), denen kein Wandbereich (32.1, 32.2, 33.1, 33.2) des Tragelements (3) zugeordnet ist, innenseitig glattflächig, insbesondere als Kunststoff- oder Blechplatte, ausgebildet oder mit einer glattflächigen Innenauskleidung (23'), insbesondere Kunststoff- oder Blechplatte, versehen sind.

36. Sammelwagen nach einem der Ansprüche 23 bis 35, **dadurch gekennzeichnet, dass** das Tragelement (3) durch ein Tuch oder ein Gewebe oder eine Plane oder eine Folie oder ein engmaschiges Netz oder durch eine Anordnung von rollladenartig gelenkig miteinander verbundenen Profilabschnitten gebildet ist.

37. Sammelwagen nach Anspruch 23 oder nach einem der Ansprüche 26 bis 36, **dadurch gekennzeichnet, dass** die freie Kante (32.1', 32.2', 33.1', 33.2') eines Wandbereichs (32.1, 32.2, 33.1, 33.2) oder mehrerer Wandbereiche (32.1, 32.2, 33.1, 33.2) oder aller Wandbereiche (32.1, 32.2, 33.1, 33.2) des Tragelements (3) durch je einen mit dem Tragelement (3) verbundenen stab-oder rohrförmigen Profilabschnitt (34) gebildet oder verstärkt ist.

## Claims

1. Device (1) for collecting compaction material (6) and for feeding the collected compaction material (6) to a press (5) that compacts the compaction material (6), comprising at least one movable collection carts (2) with a collection space (20) for compaction material (6) to be compacted, and a compaction material feeding device (4) to which the collection cart (2) can be docked, wherein the collection cart (2) has a bottom (21) and an underside wheel arrangement (26) and at least two mutually opposite side walls (22, 23), and wherein by the compaction material feeding device (4) the compaction material (6) to be compacted is removable by being lifted upwards from the collection cart (2) and can be fed to a compaction space (50) or to a compaction material supply space (51) of the press (5),
**characterised in**
- **that** a web-like flexible or linked-together support element (3) with a bottom section (31) and at least two mutually opposite wall sections (32.1, 32.2), each having at least one free upper edge (32.1', 32.2'), is arranged on or in the collection cart (2),
- **that** the support element (3) in a basic position extends in the shape of a U parallel or approximately parallel to two mutually opposite side walls (22) extending to the bottom (21) of the collection cart (2) and lies against the same, or it at least forms two mutually opposite side walls (22) and the bottom (21) of the collection cart (2), and
- **that** when the collection cart (2) is docked to the compaction material feeding device (4), the support element (3) can be shortened or lifted starting from the free edge (32.1', 32.2') of at least one of its wall sections (32.1, 32.2) for the purpose of lifting the compaction material (6) to be compacted that is located in the collection cart (2).

2. The device according to claim 1, **characterised in that** a winding shaft (35) is arranged on the free edge (32.1', 32.2') of one of the wall sections (32.1, 32.2) of the support element (3), wherein the winding shaft can be put into rotation to wind up the support element (3) when the collection cart (2) is docked to the compaction material feeding device (4).

3. The device according to claim 1, **characterised in that** one winding shaft (35) each is arranged on the free edge (32.1', 32.2') of two mutually opposite wall sections (32.1, 32.2) of the web-like support element (3), wherein the winding shafts can be put into synchronous or approximately synchronous rotation to wind up the support element (3) when the collection cart (2) is docked to the compaction material feeding device (4).

4. The device according to claim 2 or 3, **characterised in that** one or more rotationally drivable drive elements (43) are arranged on the compaction material feeding device (4), which drive elements are in or can be put to rotary drive engagement with the winding shaft (35) or shafts (35) of the collection cart (2) when it is docked to the compaction material feeding device (4).

5. The device according to claim 1, **characterised in that** a fixed upper edge (24) of the collection cart (2) is embodied as a deflection element over which the one wall section (32.1, 32.2) of the support element (3) is deflected outwardly and downwardly by 180°, wherein, when the collection cart (2) is docked to the compaction material feeding device (4), the free edge (32.1', 32.2') of the deflected wall section (32.1, 32.2) of the support element (3) can be put into downward movement from its basic position.

6. The device according to claim 1, **characterised in that** two mutually opposite fixed upper edges (24) of the collection cart (2) are each embodied as a deflection element over which two mutually opposite wall sections (32.1, 32.2) of the support element (3) are each deflected outwardly and downwardly by 180°, wherein, when the collection cart (2) is docked to the compaction material feeding device (4), the free edges (32.1', 32.2') of the deflected wall sections (32.1, 32.2) of the support element (3) can be put into synchronous or approximately synchronous downward movement from their basic position.

7. The device according to claim 1, **characterised in that** in addition to its bottom section (31) the support element (3) has four wall sections (32.1, 32.2, 33.1, 33.2) connected to or integral with the bottom section (31) and not directly connected to one another, with each wall section having a free edge (32.1', 32.2', 33.1', 33.2'), and that four fixed upper edges (24) of the collection cart (2) are embodied respectively as a deflection element over which the wall sections (32.1, 32.2, 33.1, 33.2) of the support element (3) are deflected outwardly and downwardly by 180°, wherein, when the collection cart (2) is docked onto the compaction material feeding device (4), the free edges (32.1', 32.2', 33.1', 33.2') of the respective deflected wall sections (32.1, 32.2, 33.1, 33.2) of the support element (3) can be put into synchronous or approximately synchronous downward movement from its basic position.

8. The device according to claim 5, 6, or 7, **characterised in that** a vertically movable lifting arm arrangement (44) is arranged on the compaction material feeding device (4), wherein, when the collection cart (2) is docked to the compaction material feeding device, the lifting arm arrangement (44) is in or can be put into moving engagement with the free edge (32.1', 32.2') of the deflected wall section (32.1, 32.2) or with the free edges (32.1', 32.2', 33.1', 33.2') of the deflected wall sections (32.1, 32.2, 33.1, 33.2) of the support element.

9. The device according to claim 1, **characterised in that** the support element (3) is pivotably joined at the free edge (32.1') of a first wall section (32.1) to an upper edge (24) of the collection cart (2), that starting from the free edge (32.1') of this first wall section (32.1) a wall section part (36) with an area essentially or approximately corresponding to the cross-sectional area of the collection space (20) of the collection cart (2), is embodied as a rigid area, and that the support element (3) can be shortened or lifted, starting from the free edge (32.2') of a second wall section (32.2) facing the first wall section (32.1).

10. The device according to claim 9, **characterised in that** the free edge (32,2') of the second wall section (32.2) of the support element (3) is releasably connected to the associated upper edge (24) of the collection cart (2); that a pulling device (7) or a winding device is arranged on the compaction material feeding device (4), which, when the collection cart (2) is docked to the compaction material feeding device (4), can be brought into engagement with the free edge (32.2') of the second wall section (32.2) of the support element (3) and with which the support element (3) can be pulled upwards or deflected over the upper edge (24) of the collection cart (2) and pulled downwards, or can be wound up.

11. The device according to claim 10, **characterised in that** the pulling device (7) is embodied to resemble a pulley with a horizontal, vertically displaceable deflection roller (73) over which the support element (3) is guided, and has holding means (74) designed to releasably secure the free edge (32.2') of the second wall section (32.2) of the support element (3).

12. The device according to one of claims 9 to 11, **characterised in that** in an elevated end position of the support element (3), its rigid wall section part (36) essentially or approximately covers the cross-section of the collection space (20) of the collection cart (2) and assumes a horizontal position or a position inclined downwards or upwards towards the compaction material feeding device (4).

13. The device according to one of claims 1 to 12, **characterised in that** a reset device (27) pre-stressing the support element (3) with a force acting in the direction of its basic position is arranged on the collection cart (2).

14. The device according to claim 13, **characterised in that** in or on those areas of the support element (3) lying closest to the lower corners of the collection space (20) when the support element is in its basic position, weights (38) are incorporated or attached as a reset device (27) effecting or supporting a return of the support element (3) to its basic position on being lowered from an elevated position.

15. The device according to claim 13, **characterised in that** the reset device (27) has a tension spring arrangement (28) producing a pre-stressing force acting either directly or via flexible pulling means (28') on two or more points in transitional areas between the wall sections (32.1, 32.2, 33.1, 33.2) and the bottom section (31) of the support element (3).

16. The device according to claim 1, **characterised in that** at least on the free edge (32.1', 32.2') of one of its wall sections (32.1, 32.2), the support element (3) is loosely suspended from the rest of the collection cart (2) and that the compaction material feeding device (4) has a lifting arm arrangement (45) with which, when the collection cart (2) is docked to the compaction material feeding device (4), the support element (3) can be grasped at its loosely suspended free edge (32.1', 32.2', 33.1', 32.2') remote from the compaction material feeding device (4) and can be pulled upwards by upwardly pivoting the lifting arm arrangement (45) up to a form creating a compaction material sliding surface that is downwardly inclined towards the compaction material feeding device (4).

17. The device according to claim 16, **characterised in that** the compaction material feeding device (4) has a rod-shaped contact element (47) extending over the upper side of the collection cart (2) when the collection cart (2) is docked to the compaction material feeding device (4), and the support element (3) abuts the contact element under angular deflection while being raised.

18. The device according to one of claims 1 to 17, **characterised in that** at least those side walls (23) of the collection cart (2) that are not associated with a wall section (32.1, 32.2, 33.1, 33.2) of the support element (3) are embodied with a smooth inside surface, particularly as a plastic or sheet metal plate, or are provided with a smooth-surfaced inner lining (23'), particularly of plastic or sheet metal plate.

19. The device according to one of claims 1 to 18, **characterised in that** the support element (3) is formed by a fabric or a tissue or a sheet or foil or a close-meshed net or by an arrangement of profile sections that are linked together in the manner of a roller shutter.

20. The device according to claim 1 or one of claims 5 to 19, **characterised in that** the free edge (32.1', 32.2', 33.1', 33.2') of a wall section (32.1, 32.2, 33.1, 33.2) or of several wall sections (32.1, 32.2, 33.1, 33.2), or of all wall sections (32.1, 32.2, 33.1, 33.2) of the support element (3) is or are formed or reinforced by a respective rod-shaped or pipe-shaped profile section (34) connected to the support element (3).

21. Device (1) for collecting compaction material (6) and for feeding the collected compaction material (6) to a press (5) that compacts the compaction material (6), comprising a collection container (2') having a collection space (20) for compaction material (6) to be compacted and a compaction material feeding device (4) to which the collection container (2') is immovably attached, wherein the collection container (2') has a bottom (21) and two or more mutually opposite side walls (22, 23), and wherein by the compaction material feeding device (4) the compaction material (6) to be compacted is removable by being lifted upwards from the collection container (2'), and can be fed to a compaction space (50) or compaction material supply space (51) of the press (5),
**characterised in**
- **that** a web-like flexible or linked-together support element (3) with a bottom section (31) and at least two mutually opposite wall sections (32.1, 32.2), each with at least one free upper edge (32.1', 32.2') is arranged on or in the connection container (2'),
- **that** the support element (3) in a basic position extends in the shape of a U parallel or approximately parallel to at least two mutually opposite side walls (22) and to the bottom (21) of the collection container (2') and lies against the same or forms at least two mutually opposite side walls (22) and the bottom (21) of the collection container (2'), and
- **that** the support element (3) can be shortened or lifted starting from the free edge (32.1', 32.2') of at least one of its wall sections (32.1, 32.2) for the purpose of lifting the compaction material (6) to be compacted that is located in the collection container (2').

22. The device according to claim 21, **characterised in that** it has the features of one or more of claims 2 to 20 and that the movable collection cart (2) that can be docked to the compaction material feeding device (4) is replaced with the collection container (2') that is immovably attached to the compaction material feeding device (4).

23. Movable collection cart (2) for use in the device (1) according to one of claims 1 to 20, wherein the collection cart (2) has a collection space (20) for compaction material (6) to be compacted and can be docked to a compaction material feeding device (4) of a press (5), wherein the collection cart (2) has a bottom (21) and an underside wheel arrangement (26) and at least two mutually opposite side walls (22, 23), and wherein by the compaction material feeding device (4) the compaction material (6) to be compacted is removable by being lifted upwards from the collection cart (2), and can be fed to a compaction space (50) or compaction material supply space (51) of the press (5),
**characterised in**
- **that** a web-like flexible or linked-together support element (3) with a bottom section (31) and at least two mutually opposite wall sections (32.1, 32.2), each with at least one free upper edge (32.1', 32.2'), is arranged on or in the collection cart (2),
- **that** the support element (3) in a basic position extends in the shape of a U parallel or approximately parallel to two or more mutually opposite side walls (22) and to the bottom (21) of the collection cart (2) and lies against the same or forms at least two mutually opposite side walls (22) and the bottom (21) of the collection cart (2), and
- **that** the support element (3) can be shortened or lifted starting from the free edge (32.1', 32.2', 33.1', 33.2') of at least one of its wall sections (32.1, 32.2, 33.1, 33.2), for the purpose of lifting the compaction material (6) to be compacted that is located in the collection cart (2).

24. The collection cart according to claim 23, **characterised in that** a winding shaft (35) that can be put into a rotation to wind up the support element (3) is arranged on the free edge (32.1', 32.2') of one of the wall sections (32.1, 32.2) of the support element (3).

25. The collection cart according to claim 23, **characterised in that** one winding shaft (35) each is arranged on the free edge (32.1', 32.2') of two mutually opposite wall sections (32.1, 32.2) of the web-like support element (3) and can be put to synchronous or approximately synchronous rotation to wind up the support element (3).

26. The collection cart according to claim 23, **characterised in that** a fixed upper edge (24) of the collection cart (2) is embodied as a deflection element over which the one wall section (32.1, 32.2) of the support element (3) is deflected by 180°, wherein the free edge (32.1', 32.2') of the deflected wall section (32.1, 32.2) of the support element (3) can be put into a downward movement from its basic position.

27. The collection cart according to claim 23, **characterised in that** two mutually opposite fixed upper edges (24) of the collection cart (2) are each embodied as a deflection element over which two mutually opposite wall sections (32.1, 32.2) of the support element (3) are each deflected by 180°, wherein the free edges (32.1', 32.2') of the deflected wall sections (32.1, 32.2) of the support element (3) can be put into a synchronous or approximately synchronous downward movement from its basic position.

28. The collection cart according to claim 23, **characterised in that** in addition to its bottom section (31) the support element (3) has four wall sections (32.1, 32.2, 33.1, 33.2) connected to or integral with the bottom section (31) and not directly connected to one another, with each wall section having a free upper edge (32.1', 32.2', 33.1', 33.2'), and that four fixed upper edges (24) of the collection cart (2) are each embodied as a deflection element over which the wall sections (32.1, 32.2, 33.1, 33.2) of the support element (3) are each deflected by 180°, wherein the free edges (32.1', 32.2', 33.1', 33.2') of the deflected wall sections (32.1, 32.2, 33.1, 33.2) of the support element (3) can be put into a synchronous or approximately synchronous downward movement from its basic position.

29. The collection cart according to claim 23, **characterised in that** the support element (3) is pivotably hinged at the free edge (32.1') of a first wall section (32.1) to an upper edge (24) of the collection cart (2), that starting from the free edge (32.1') of this first wall section (32.1) a wall section part (36) with an area essentially or approximately corresponding to the cross-sectional area of the collection space (20) of the collection cart (2) is embodied as a rigid area, and that the support element (3) can be shortened or elevated, starting from the free edge (32.2') of a second wall section (32.2) lying opposite the first wall section (32.1).

30. The collection cart according to claim 29, **characterised in that** the free edge (32.2') of the second wall section (32.2) of the support element (3) is releasably connected to the associated upper edge (24) of the collection cart (2) and that by means of a pulling device (7) or a winding device which can be brought into engagement with the free edge (32.2') of the second wall section (32.2) of the support element (3) the support element (3) can be pulled upwards or by deflection downwards over the upper edge (24) of the collection cart (2), or can be wound up.

31. The collection cart according to claim 29 or 30, **characterised in that** in an elevated end position of the support element (3) its rigid wall section part (36) essentially or approximately covers the cross-section of the collection space (20) of the collection cart (2) and assumes an essentially horizontal position or a position downwardly or upwardly inclined in the direction of removal of the compaction material (6) to be compacted.

32. The collection cart according to one of claims 23 to 31, **characterised in that** a reset device (27) pre-stressing the support element (3) with a force acting in the direction of its basic position is arranged on the collection cart (2).

33. The collection cart according to claim 32, **characterised in that** in or on the areas of the support element (3) lying closest to the lower corners of the collection space (20) when the support element is in its basic position, weights (38) are incorporated or attached as a reset device (27) effecting or supporting a return of the support element (3) to its basic position upon being lowered from an elevated position.

34. The collection cart according to claim 32, **characterised in that** the reset device (27) has a tension spring arrangement (28) producing the pre-stressing force that acts either directly or via flexible pulling means (28') on two or more points in transitional areas between the wall sections (32.1, 32.2, 33.1, 33.2) and the bottom section (31) of the support element (3).

35. The collection cart according to one of claims 23 to 34, **characterised in that** at least those side walls (22, 23) of the collection cart (2) that are not associated with a wall section (32.1, 32.2, 33.1, 33.2) of the support element (3) are embodied with a smooth inner surface, particularly as a plastic or sheet metal plate, or are provided with a smooth-surfaced inner lining (23'), particularly of plastic or sheet metal plate.

36. The collection cart according to one of claims 23 to 35, **characterised in that** the support element (3) is formed by a fabric or tissue or a sheet or a foil or a close-meshed net or by an arrangement of profile sections that are linked together in the manner of a roller shutter.

37. The collection cart according to claim 23 or one of claims 26 to 36, **characterised in that** the free edge (32.1', 32.2', 33.1', 33.2') of a wall section (32.1, 32.2, 33.1, 33.2) or of several wall sections (32.1, 32.2, 33.1, 33.2), or of all wall sections (32.1, 32.2, 33.1, 33.2) of the support element (3) is or are formed or reinforced by a respective rod-shaped or pipe-shaped profile section (34) connected to the support element (3).

## Revendications

1. Dispositif (1) de collecte de produit à presser (6) et d'amenée dudit produit à presser (6) collecté à une presse (5) destinée à presser le produit à presser (6), doté d'au moins un chariot de collecte (2) déplaçable qui présente une chambre de collecte (20) pour du produit à presser (6), et d'un dispositif d'amenée de produit à presser (4) auquel ledit chariot de collecte (2) peut être attelé, ledit chariot de collecte (2) présentant un fond (21) et un ensemble de roues (26) sur sa sous-face ainsi qu'au moins deux parois latérales (22, 23) en vis-à-vis l'une de l'autre, et lorsqu'il est soulevé vers le haut, le produit à presser (6) pouvant être prélevé du chariot de collecte (2) à l'aide du dispositif d'amenée de produit à presser (4) et amené à une chambre de presse (50) ou chambre de réserve en produit à presser (51) de la presse (5),
**caractérisé en ce**
- **qu'**est agencé, sur ou dans le chariot de collecte (2), un élément porteur (3) en forme de bande, souple ou articulé, doté d'une zone de fond (31) et doté d'au moins deux zones de paroi en vis-à-vis l'une de l'autre (32.1, 32.2) dotées chacune d'au moins une arête supérieure libre (32.1', 32.2'),
- **que** l'élément porteur (3) est accolé, dans une position initiale, en forme de U parallèlement ou approximativement parallèlement à au moins deux parois latérales (22) en vis-à-vis l'une de l'autre et au fond (21) du chariot de collecte (2), ou forme au moins deux parois latérales (22) en vis-à-vis l'une de l'autre et le fond (21) du chariot de collecte (2), et
- **que** lorsque le chariot de collecte (2) est attelé au dispositif d'amenée de produit à presser (4) aux fins de soulever le produit (6) à presser se trouvant dans le chariot de collecte (2), l'élément porteur (3) peut être raccourci ou soulevé à partir de l'arête libre (32.1', 32.2') d'au moins une de ses zones de paroi (32.1, 32.2).

2. Dispositif selon la revendication 1, **caractérisé en ce qu'**un arbre d'enroulement (35) est agencé sur l'arête libre (32.1', 32.2') d'une des zones de paroi (32.1, 32.2) de l'élément porteur (3), lequel arbre d'enroulement peut être mis dans un mouvement de rotation enroulant l'élément porteur (3) lorsque le chariot de collecte (2) est attelé au dispositif d'amenée de produit à presser (4).

3. Dispositif selon la revendication 1, **caractérisé en ce qu'**un arbre d'enroulement (35) est agencé sur l'arête libre (32.1', 32.2') de chacune de deux zones de paroi (32.1, 32.2) en vis-à-vis l'une de l'autre de l'élément porteur (3) en forme de bande, lesquels arbres d'enroulement peuvent être mis dans un mouvement de rotation synchrone ou approximativement synchrone enroulant l'élément porteur (3) lorsque le chariot de collecte (2) est attelé au dispositif d'amenée de produit à presser (4).

4. Dispositif selon la revendication 2 ou 3, **caractérisé en ce que** sont agencés un ou plusieurs éléments d'entraînement (43) sur le dispositif d'amenée de produit à presser (4), qui peuvent être entraînés en rotation et, lorsque le chariot de collecte (2) est attelé au dispositif d'amenée de bien à presser (4), qui sont en prise en rotation ou peuvent être mis en prise en rotation avec son arbre d'enroulement (35) ou ses arbres d'enroulement (35).

5. Dispositif selon la revendication 1, **caractérisé en ce qu'**un bord supérieur fixe (24) du chariot de collecte (2) est réalisé sous forme d'élément de déviation permettant de dévier ladite une zone de paroi (32.1, 32.2) de l'élément porteur (3) de 180° vers l'extérieur et le bas, l'arête libre (32.1', 32.2') de la zone de paroi (32.1, 32.2) déviée de l'élément porteur (3) pouvant, lorsque le chariot de collecte (2) est attelé au dispositif d'amenée de produit à presser (4), être mise dans un mouvement vers le bas à partir de la position initiale du dit élément porteur.

6. Dispositif selon la revendication 1, **caractérisé en ce que** deux bords supérieurs fixes (24) du chariot de collecte (2) en vis-à-vis l'un de l'autre sont chacun réalisés sous forme d'élément de déviation permettant de dévier deux zones de paroi (32.1, 32.2) de l'élément porteur (3) en vis-à-vis l'une de l'autre de 180° vers l'extérieur et le bas chacune, les arêtes libres (32.1', 32.2') des zones de paroi (32.1, 32.2) déviées de l'élément porteur (3) pouvant, lorsque le chariot de collecte (2) est attelé au dispositif d'amenée de produit à presser (4), être chacune mises dans un mouvement vers le bas, synchrone ou approximativement synchrone, à partir de la position initiale dudit élément porteur.

7. Dispositif selon la revendication 1, **caractérisé en ce que** l'élément porteur (3) présente, outre sa zone de fond (31), quatre zones de paroi (32.1, 32.2, 33.1, 33.2) reliées à la zone de fond (31) ou d'un seul tenant non reliées directement l'une à l'autre, dotées chacune d'une arête libre (32.1', 32.2', 33.1', 33.2'), et que quatre bords supérieurs fixes (24) du chariot de collecte (2) sont chacun réalisés sous forme d'élément de déviation permettant de dévier les zones de paroi (32.1, 32.2, 33.1, 33.2) de l'élément porteur (3) de 180° vers l'extérieur et le bas chacune, les arêtes libres (32.1', 32.2', 33.1', 33.2') des zones de paroi (32.1, 32.2, 33.1, 33.2) déviées de l'élément porteur (3) pouvant, lorsque le chariot de collecte (2) est attelé au dispositif d'amenée de produit à presser (4), être mise chacune dans un mouvement vers le bas, synchrone ou approximativement synchrone, à partir de la position initiale dudit élément porteur.

8. Dispositif selon la revendication 5, 6 ou 7, **caractérisé en ce qu'**un ensemble de bras de levage (44) susceptible d'être déplacé à la verticale est agencé sur le dispositif d'amenée de produit à presser (4), ledit agencement de bras de levage (44) pouvant, lorsque le chariot de collecte (2) est attelé au dispositif d'amenée de produit à presser (4), être en prise ou mis en prise de mouvement avec l'arête libre (32.1', 32.2') de la zone de paroi (32.1, 32.2) déviée ou avec les arêtes libres (32.1', 32.2', 33.1', 33.2') des zones de paroi (32.1, 32.2, 33.1, 33.2) déviées de l'élément porteur (3).

9. Dispositif selon la revendication 1, **caractérisé en ce que** l'élément porteur (3) à l'arête libre (32.1') d'une première zone de paroi (32.1) est fixé par articulation de manière pivotable à un bord supérieur (24) du chariot de collecte (2), qu'à partir de l'arête libre (32.1') de cette première zone de paroi (32.1) une portion de zone de paroi (36), dont la surface est sensiblement ou approximativement égale à la surface de section de la chambre de collecte (20) du chariot de collecte (2), est réalisée en tant que surface rigide, et que l'élément porteur (3) peut être raccourci ou soulevé à partir de l'arête libre (32.2") d'une deuxième zone de paroi (32.2) en vis-à-vis de la première zone de paroi (32.1).

10. Dispositif selon la revendication 9, **caractérisé en ce que** l'arête libre (32.2') de la deuxième zone de paroi (32.2) de l'élément porteur (3) est reliée de manière amovible au bord supérieur (24) correspondant du chariot de collecte (2), qu'est agencé au dispositif d'amenée du produit à presser (4) un dispositif de traction (7) ou un dispositif d'enroulement qui peut, lorsque le chariot de collecte (2) est attelé au dispositif d'amenée de produit à presser (4), être mis en prise avec l'arête libre (32.2') de la deuxième zone de paroi (32.2) de l'élément porteur (3) et qui permet de tirer l'élément porteur (3) vers le haut ou, par déviation au-dessus du bord supérieur (24) du chariot de collecte (2), vers le bas, ou de l'enrouler.

11. Dispositif selon la revendication 10, **caractérisé en ce que** le dispositif de traction (7) est réalisé de type poulie multiple, doté d'une poulie de renvoi (73) horizontale et susceptible d'être déplacée verticalement, par laquelle est guidé l'élément porteur (3), et qu'il présente des moyens de retenue (74) destinés à fixer de manière amovible l'arête libre (32.2') de la deuxième zone de paroi (32.2) de l'élément porteur (3).

12. Dispositif selon l'une quelconque des revendications 9 à 11, **caractérisé en ce que** dans une position finale de soulèvement de l'élément porteur (3), sa portion rigide de zone de paroi (36) recouvre sensiblement ou approximativement la section droite de la chambre de collecte (20) du chariot de collecte (2) et prend une position horizontale ou une position inclinée vers le bas ou vers le haut, en direction du dispositif d'amenée de produit à presser (4).

13. Dispositif selon l'une quelconque des revendications 1 à 12, **caractérisé en ce qu'**un dispositif de rappel (27) qui pré-sollicite l'élément porteur (3) à l'aide d'une force qui agit en direction de sa position initiale est agencé sur le chariot de collecte (2).

14. Dispositif selon la revendication 13, **caractérisé en ce que** des poids de lestage (38) provoquant ou soutenant un rappel de l'élément porteur (3) dans sa position initiale au moment où ledit élément porteur (3) est rabaissé d'une position élevée, sont intégrés ou montés en tant que dispositif de rappel (27) dans ou sur les zones de l'élément porteur (3) qui, dans la position initiale de ce dernier, sont les plus proches de coins inférieurs de la chambre de collecte (20).

15. Dispositif selon la revendication 13, **caractérisé en ce que** ledit dispositif de rappel (27) présente un ensemble de ressorts de tension (28) générant la force de pré-sollicitation, lequel ensemble agit directement ou par moyens de traction souples (28') au niveau de deux ou plus points dans des zones de transition entre les zones de paroi (32.1, 32.2, 33.1, 33.2) et la zone de fond (31) de l'élément porteur (3).

16. Dispositif selon la revendication 1, **caractérisé en ce que** l'élément porteur (3), au moins à l'arête libre (32.1', 32.2') d'une de ses zones de paroi (32.1, 32.2), est accroché de manière lâche au reste du chariot de collecte (2), et que le dispositif d'amenée de produit à presser (4) présente un ensemble de bras de levée (45), qui permet, lorsque le chariot de collecte (2) est attelé au dispositif d'amenée de produit à presser (4), d'appréhender l'élément porteur (3) à son arête libre (32.1', 32.2', 33.1', 32.2') accrochée de manière lâche et éloignée du dispositif d'amenée de produit à presser (4), et de le tirer vers le haut, par pivotement de l'ensemble de bras de levée (45) dans un sens orienté vers le haut jusque dans une forme formant une surface de glissement de produit à presser inclinée vers le bas en direction du dispositif d'amenée de produit à presser (4).

17. Dispositif selon la revendication 16, **caractérisé en ce que** le dispositif d'amenée de produit à presser (4) présente un élément d'amarrage (47) en forme de barre qui, lorsque le chariot de collecte (2) est attelé au dispositif d'amenée de produit à presser (4), passe par la face supérieure de celui-ci et auquel l'élément porteur (3) peut être amarré, au moment où il est tiré vers le haut, en formant un coude.

18. Dispositif selon l'une quelconque des revendications 1 à 17, **caractérisé en ce que** sur le chariot de collecte (2), au moins ses parois latérales (23), auxquelles n'est associée aucune zone de paroi (32.1, 32.2, 33.1, 33.2) de l'élément porteur (3), sont réalisées à l'intérieur avec une surface lisse, notamment sous forme de plaque en matière plastique ou en tôle, ou sont pourvues d'un revêtement intérieur (23') à surface lisse, notamment une plaque en matière plastique ou en tôle.

19. Dispositif selon l'une quelconque des revendications 1 à 18, **caractérisé en ce que** l'élément porteur (3) est formé d'une toile, d'un tissu, d'une bâche, d'un film, d'un filet à mailles fines ou d'un ensemble de portions de profilés reliées entre elles de manière articulée de type volet roulant.

20. Dispositif selon la revendication 1 ou selon l'une quelconque des revendications 5 à 19, **caractérisé en ce que** l'arête libre (32.1', 32.2', 33.1', 33.2') d'une zone de paroi (32.1, 32.2, 33.1, 33.2) ou de plusieurs zones de paroi (32.1, 32.2, 33.1, 33.2) ou de toutes les zones de paroi (32.1, 32.2, 33.1, 33.2) de l'élément porteur (3) est formée de ou renforcée respectivement par une portion de profilés (34) en forme de barres ou de tubes reliée à l'élément porteur (3).

21. Dispositif (1) de collecte de produit à presser (6) et d'amenée du produit à presser (6) collecté à une presse (5) destinée à presser le produit à presser (6), doté d'un récipient de collecte (2') qui présente une chambre de collecte (20) pour du produit à presser (6), et d'un dispositif d'amenée de produit à presser (4) auquel ledit récipient de collecte (2') est accolé de manière stationnaire, ledit récipient de collecte (2') présentant un fond (21) et au moins deux parois latérales (22, 23) en vis-à-vis l'une de l'autre, et lorsqu'il est soulevé vers le haut, le produit à presser (6) pouvant être prélevé du récipient de collecte (2') à l'aide du dispositif d'amenée de produit à presser (4) et amené à une chambre de presse (50) ou chambre de réserve en produit à presser (51) de la presse (5),
**caractérisé en ce**
- **qu'**est agencé, sur ou dans le récipient de collecte (2'), un élément porteur (3) en forme de bande, souple ou articulé, doté d'une zone de fond (31) et doté d'au moins deux zones de paroi (32.1, 32.2) en vis-à-vis l'une de l'autre, dotées chacune d'au moins une arête supérieure libre (32.1', 32.2'),
- **que** l'élément porteur (3) est accolé, dans une position initiale, en forme de U parallèlement ou approximativement parallèlement à au moins deux parois latérales (22) en vis-à-vis l'une de l'autre et au fond (21) du récipient de collecte (2'), ou forme au moins deux parois latérales (22) en vis-à-vis l'une de l'autre et le fond (21) du récipient de collecte (2'), et
- **qu'**aux fins de soulever le produit (6) à presser se trouvant dans le récipient de collecte (2'), l'élément porteur (3) peut être raccourci ou soulevé à partir de l'arête libre (32.1', 32.2') d'au moins une de ses zones de paroi (32.1, 32.2).

22. Dispositif selon la revendication 21, **caractérisé en ce qu'**il présente les caractéristiques d'une quelconque ou de plusieurs des revendications 2 à 20 et qu'à cet égard, le chariot de collecte (2) susceptible d'être déplacé et attelé au dispositif d'amenée de produit à presser (4) est remplacé par le récipient de collecte (2') accolé de manière stationnaire au dispositif d'amenée de produit à presser (4).

23. Chariot de collecte (2) déplaçable destiné à être utilisé dans le dispositif (1) selon l'une quelconque des revendications 1 à 20, le chariot de collecte (2) présentant une chambre de collecte (20) pour du produit à presser (6) et pouvant être attelé à un dispositif d'amenée de produit à presser (4) d'une presse (5), ledit chariot de collecte (2) présentant un fond (21) et un ensemble de roues (26) sur sa sous-face ainsi qu'au moins deux parois latérales (22, 23) en vis-à-vis l'une de l'autre, et lorsqu'il est soulevé vers le haut, le produit à presser (6) pouvant être prélevé du chariot de collecte (2) à l'aide du dispositif d'amenée de produit à presser (4) et amené à une chambre de presse (50) ou chambre de réserve en produit à presser (51) de la presse (5),
**caractérisé en ce**
- **qu'**est agencé, sur ou dans le chariot de collecte (2), un élément porteur (3) en forme de bande, souple ou articulé, doté d'une zone de fond (31) et doté d'au moins deux zones de paroi (32.1, 32.2) en vis-à-vis l'une de l'autre, dotées chacune d'au moins une arête supérieure libre (32.1', 32.2'),
- **que** l'élément porteur (3) est accolé, dans une position initiale, en forme de U parallèlement ou approximativement parallèlement à au moins deux parois latérales (22) en vis-à-vis l'une de l'autre et au fond (21) du chariot de collecte (2), ou forme au moins deux parois latérales (22) en vis-à-vis l'une de l'autre et le fond (21) du chariot de collecte (2), et
- **qu'**aux fins de soulever le produit (6) à presser se trouvant dans le chariot de collecte (2), l'élément porteur (3) peut être raccourci ou soulevé à partir de l'arête libre (32.1', 32.2', 33.1', 33.2') d'au moins une de ses zones de parois (32.1, 32.2, 33.1, 33.2).

24. Chariot de collecte selon la revendication 23, **caractérisé en ce qu'**un arbre d'enroulement (35) est agencé sur l'arête libre (32.1', 32.2') d'une des zones de paroi (32.1, 32.2) de l'élément porteur (3), lequel arbre d'enroulement pouvant être mis dans un mouvement de rotation enroulant l'élément porteur (2).

25. Chariot de collecte selon la revendication 23, **caractérisé en ce qu'**un arbre d'enroulement (35) est agencé sur l'arête libre (32.1', 32.2') de chacune de deux zones de paroi (32.1, 32.2), en vis-à-vis l'une de l'autre, de l'élément porteur (3) en forme de bande, lesquels arbres d'enroulement peuvent être mis dans un mouvement de rotation synchrone ou approximativement synchrone enroulant l'élément porteur (3).

26. Chariot de collecte selon la revendication 23, **caractérisé en ce qu'**un bord supérieur fixe (24) du chariot de collecte (2) est réalisé sous forme d'élément de déviation permettant de dévier ladite une zone de paroi (32.1, 32.2) de l'élément porteur (3) de 180°, l'arête libre (32.1', 32.2') de la zone de paroi (32.1, 32.2) déviée de l'élément porteur (3) pouvant être mise dans un mouvement vers le bas à partir de la position initiale dudit élément porteur.

27. Chariot de collecte selon la revendication 23, **caractérisé en ce que** deux bords supérieurs fixes (24) du chariot de collecte (2) en vis-à-vis l'un de l'autre sont chacun réalisés en tant qu'élément de déviation permettant de dévier deux zones de paroi (32.1, 32.2) de l'élément porteur (3) en vis-à-vis l'une de l'autre de 180° chacune, les arêtes libres (32.1', 32.2') des zones de paroi (32.1, 32.2) déviées de l'élément porteur (3) pouvant être chacune mise dans un mouvement de rotation, synchrone ou approximativement synchrone, vers le bas à partir de la position initiale dudit élément porteur.

28. Chariot de collecte selon la revendication 23, **caractérisé en ce que** l'élément porteur (3) présente, outre sa zone de fond (31), quatre zones de paroi (32.1, 32.2, 33.1, 33.2) reliées à la zone de fond (31) ou d'un seul tenant non reliées directement l'une à l'autre, dotées chacune d'une arête libre supérieure (32.1', 32.2', 33.1', 33.2'), et que quatre bords supérieurs fixes (24) du chariot de collecte (2) sont chacun réalisés en tant qu'élément de déviation permettant de dévier les zones de paroi (32.1, 32.2, 33.1, 33.2) de l'élément porteur (3) de 180° chacune, les arêtes libres (32.1', 32.2', 33.1', 33.2') des zones de paroi (32.1, 32.2, 33.1, 33.2) déviées de l'élément porteur (3) pouvant être chacune mise dans un mouvement, synchrone ou approximativement synchrone, vers le bas à partir de la position initiale dudit élément porteur.

29. Chariot de collecte selon la revendication 23, **caractérisé en ce que** l'élément porteur (3) à l'arête libre (32.1') d'une première zone de paroi (32.1) est fixé par articulation de manière pivotable à un bord supérieur (24) du chariot de collecte (2), qu'à partir de l'arête libre (32.1') de cette première zone de paroi (32.1) une portion de zone de paroi (36), dont la surface est sensiblement ou approximativement égale à la surface de section de la chambre de collecte (20) du chariot de collecte (2), est réalisée en tant que surface rigide, et que l'élément porteur (3) peut être raccourci ou soulevé à partir de l'arête libre (32.2") d'une deuxième zone de paroi (32.2) en vis-à-vis de la première zone de paroi (32.1).

30. Chariot de collecte selon la revendication 29, **caractérisé en ce que** l'arête libre (32.2') de la deuxième zone de paroi (32.2) de l'élément porteur (3) est reliée de manière amovible au bord supérieur (24) correspondant du chariot de collecte (2), et qu'un dispositif de traction (7) ou un dispositif d'enroulement, avec lequel l'arête libre (32.2') de la deuxième zone de paroi (32.2) de l'élément porteur (3) peut être mise en prise, permet de tirer l'élément porteur (3) vers le haut ou, par déviation au-dessus du bord supérieur (24) du chariot de collecte (2), vers le bas, ou de l'enrouler.

31. Chariot de collecte selon la revendication 29 ou 30, **caractérisé en ce que** dans une position finale de soulèvement de l'élément porteur (3), sa portion rigide de zone de paroi (36) recouvre sensiblement ou approximativement la section droite de la chambre de collecte (20) du chariot de collecte (2) et prend une position sensiblement horizontale ou une position inclinée vers le bas ou vers le haut dans le sens de prélèvement du produit à presser (6).

32. Chariot de collecte selon l'une quelconque des revendications 23 à 31, **caractérisé en ce qu'**un dispositif de rappel (27), qui pré-sollicite l'élément porteur (3) à l'aide d'une force qui agit en direction de la position initiale de celui-ci, est agencé sur le chariot de collecte (2).

33. Chariot de collecte selon la revendication 32, **caractérisé en ce que** des poids de lestage (38) provoquant ou soutenant un rappel de l'élément porteur (3) dans sa position initiale au moment où ledit élément porteur (3) est rabaissé d'une position élevée, sont intégrés ou montés en tant que dispositif de rappel (27) dans ou sur les zones de l'élément porteur (3) qui, dans la position initiale de ce dernier, sont les plus proches de coins inférieurs de la cellule de collecte (20).

34. Chariot de collecte selon la revendication 32, **caractérisé en ce que** le dispositif de rappel (27) présente un ensemble de ressorts de tension (28) générant la force de pré-sollicitation, lequel ensemble agit directement ou par moyens de traction souples (28') au niveau de deux ou plus points dans des zones de transition entre les zones de parois (32.1, 32.2, 33.1, 33.2) et la zone de fond (31) de l'élément porteur (3).

35. Chariot de collecte selon l'une quelconque des revendications 23 à 34, **caractérisé en ce que** sur le chariot de collecte (2), au moins ses parois latérales (22, 23), auxquelles n'est associée aucune zone de paroi (32.1, 32.2, 33.1, 33.2) de l'élément porteur (3), sont réalisées à l'intérieur avec une surface lisse, notamment sous forme de plaque en matière plastique ou en tôle, ou sont pourvues d'un revêtement intérieur (23') à surface lisse, notamment une plaque en matière plastique ou en tôle.

36. Chariot de collecte selon l'une quelconque des revendications 23 à 35, **caractérisé en ce que** l'élément porteur (3) est formé d'une toile, d'un tissu, d'une bâche, d'un film, d'un filet à fines mailles ou d'un ensemble de portions de profilés reliées entre elles de manière articulée de type volet roulant.

37. Chariot de collecte selon la revendication 23 ou selon l'une quelconque des revendications 26 à 36, **caractérisé en ce que** l'arête libre (32.1', 32.2', 33.1', 33.2') d'une zone de paroi (32.1, 32.2, 33.1, 33.2) ou de plusieurs zones de parois (32.1, 32.2, 33.1, 33.2) ou de toutes les zones de parois (32.1, 32.2, 33.1, 33.2) de l'élément porteur (3) est formée de ou renforcée respectivement par une portion de profilés (34) en forme de barres ou de tubes reliée à l'élément porteur (3).
